# EUROPEAN PATENT APPLICATION

(11) **EP 4 129 673 A1**
(43) Date of publication of application: **08.02.2023**
(21) Application number: 21780112.5
(22) Date of filing: 29.03.2021
(51) Int. Cl.: B32B 27/32, B32B 1/02, B32B 9/00, B32B 15/085, B65D 35/10, B65D 65/40, C08L 23/02, C08L 23/04, C08L 53/00

(54) **MULTILAYER BODY AND PACKAGING CONTAINER FORMED OF MULTILAYER BODY**

(30) Priority: 31.03.2020 JP 2020063340; 31.03.2020 JP 2020065043; 31.03.2020 JP 2020065053; 31.03.2020 JP 2020065071; 31.03.2020 JP 2020065082
(71) Applicant: Dai Nippon Printing Co., Ltd., Tokyo 162-8001 (JP)
(72) Inventor: YAMADA Kenichi, Tokyo 162-8001 (JP); HAYASHI Kaeko, Tokyo 162-8001 (JP); KAWAKITA Noriaki, Tokyo 162-8001 (JP); SUZUKI Yoshihiko, Tokyo 162-8001 (JP)
(74) Representative: Müller-Boré & Partner Patentanwälte PartG mbB
(86) International application number: PCT/JP2021/013269
(87) International publication number: WO 2021/200816

(57) **Abstract**

A laminate according to the present disclosure is a laminate including at least a first sealant layer, a vapor deposition film, and a second sealant layer in this order, wherein the first sealant layer includes at least a polyethylene resin layer and a surface resin layer, the vapor deposition film is located on the surface resin layer of the first sealant layer, the second sealant layer is composed of a polyethylene resin, and the surface resin layer of the first sealant layer contains a resin material with a melting point of 150°C or more.

## Description

### [Cross-Reference to Related Applications]

The present application claims the priority from Japanese Patent Application No. 2020-063340 filed on March 31, 2020, Japanese Patent Application No. 2020-065043 filed on March 31, 2020, Japanese Patent Application No. 2020-065053 filed on March 31, 2020, Japanese Patent Application No. 2020-065071 filed on March 31, 2020, and Japanese Patent Application No. 2020-065082 filed on March 31, 2020, which are incorporated herein by reference in their entirety.

### Technical Field

The present disclosure relates to a laminate and a packaging container.

### Background Art

Due to their good mechanical characteristics, chemical stability, heat resistance, and transparency, as well as low prices, resin films composed of a polyester resin, such as poly(ethylene terephthalate), (hereinafter also referred to as polyester films) have been used as substrates constituting multilayer bodies used to produce packaging containers.

Such a polyester film is generally laminated with a polyethylene film serving as a sealant layer to form a laminate, which is then formed into a packaging container.

Such a packaging container formed of a laminate of different resin films, that is, a polyester film and a polyethylene film, is difficult to separate into their respective layers. Thus, such packaging containers collected after use are not suitable for recycling and are not actively recycled.

To improve the recyclability of packaging containers, the production of a packaging container (mono-material packaging container) with a laminate composed of the same material, using a polyester film instead of a polyester film, has been studied.

### Summary of Invention

### Technical Problem

The present inventors have found new problems that the formation of a vapor deposition film on a surface of a stretched polyethylene film to compensate for gas barrier properties impaired by substituting the stretched polyethylene film for a polyester film and to improve the design performance and gloss of the stretched polyethylene film causes insufficient adhesion between the stretched polyethylene film and the vapor deposition film and, when a packaging container is produced from the stretched polyethylene film on which the vapor deposition film is formed, may cause separation (delamination) between the stretched polyethylene film and the vapor deposition film.

Furthermore, surprisingly, the present inventors have found that these problems can be solved by adjusting the density of a polyethylene resin in a layer of a substrate composed of the polyethylene resin on which a vapor deposition film is formed and thereby significantly improving the adhesion between the layer and the vapor deposition film.

Furthermore, surprisingly, the present inventors have found that these problems can be solved by adding an olefin elastomer together with a polyethylene resin to a layer of a substrate composed of the polyethylene resin on which a vapor deposition film is formed and thereby significantly improving the adhesion between the layer and the vapor deposition film. The reason for improved adhesion to the vapor deposition film is not clear but may be as described below. In a polyethylene film subjected to stretching, in general, an amorphous component decreases, and oriented crystals increase. Thus, the adhesion between the polyethylene film and a vapor deposition film of aluminum or the like tends to decrease. In the present disclosure, an olefin elastomer contained together with a polyethylene resin can adjust orientation and crystallization while stretching and maintain the adhesiveness to a vapor deposition film.

The present disclosure is based on such findings and firstly aims to provide a laminate that can be suitably used to produce a mono-material packaging container, has high adhesiveness to a vapor deposition film, can effectively prevent delamination in a packaging container, and has high gas barrier properties.

A second object of the present disclosure is to provide a packaging container composed of the laminate.

### Solution to Problem

A laminate according to a first embodiment of the present disclosure is a laminate including at least a first sealant layer, a vapor deposition film, and a second sealant layer in this order,
wherein the first sealant layer includes at least a polyethylene resin layer and a surface resin layer,
the vapor deposition film is located on the surface resin layer of the first sealant layer,
the second sealant layer is composed of a polyethylene resin, and
the surface resin layer of the first sealant layer contains a resin material with a melting point of 150°C or more.

A laminate according to a second embodiment of the present disclosure is a laminate including at least a first sealant layer, a vapor deposition film, a substrate, and a second sealant layer in this order,
wherein the substrate includes at least a polyethylene resin layer and a surface resin layer,
the vapor deposition film is located on the surface resin layer of the substrate,
the first sealant layer and the second sealant layer are composed of a polyethylene resin, and
the surface resin layer of the substrate contains a resin material with a melting point of 150°C or more.

A laminate according to a third embodiment of the present disclosure is a laminate including at least a first sealant layer, a vapor deposition layer, and a substrate in this order,
wherein the substrate includes a polyethylene resin layer composed of a polyethylene resin and an olefin elastomer resin,
the substrate is subjected to stretching,
the vapor deposition film is located on the polyethylene resin layer, and
the first sealant layer is composed of a polyethylene resin.

A laminate according to a fourth embodiment of the present disclosure is a laminate including at least a first sealant layer, a vapor deposition film, a substrate, a gas barrier layer, and a second sealant layer in this order,
wherein the substrate includes at least a first polyethylene resin layer composed of a polyethylene resin with a density of 0.943 g/cm³ or less,
the substrate is subjected to stretching,
the vapor deposition film is located on a first polyethylene resin layer of the substrate, and
the first sealant layer and the second sealant layer are composed of a polyethylene resin.

The present disclosure also provides a packaging container composed of any one of these laminates.

### Advantageous Effects of Invention

The present disclosure can provide a laminate that can be suitably used to produce a mono-material packaging container, can significantly improve the adhesiveness to a vapor deposition film, and can achieve preferred gas barrier properties.

### Brief Description of Drawings

[Fig. 1] Fig. 1 is a schematic cross-sectional view of an embodiment of a laminate according to a first embodiment.
[Fig. 2] Fig. 2 is a schematic cross-sectional view of an embodiment of a deposition apparatus.
[Fig. 3] Fig. 3 is a schematic cross-sectional view of an embodiment of a deposition apparatus.
[Fig. 4] Fig. 4 is a schematic cross-sectional view of an embodiment of a laminate according to a second embodiment.
[Fig. 5] Fig. 5 is a schematic cross-sectional view of an embodiment of a laminate according to a third embodiment.
[Fig. 6] Fig. 6 is a schematic cross-sectional view of an embodiment of the laminate according to the third embodiment.
[Fig. 7] Fig. 7 is a schematic cross-sectional view of an embodiment of a laminate according to a fourth embodiment.
[Fig. 8] Fig. 8 is a front view of a laminated tube according to an embodiment of a packaging container.
[Fig. 9] Fig. 9 is a cross-sectional view taken along the line a-a of Fig. 8.

### Description of Embodiments

Embodiments are described below with reference to the drawings as required. In the drawings, for the sake of clarity, the width, thickness, and the like of each portion may be more schematic than those in actual embodiments, and these are only examples and do not limit the interpretation of the present disclosure. Furthermore, in the present description and drawings, like reference numerals and letters denote like parts, and the detailed description thereof may be appropriately omitted.

### [First Embodiment]

A first embodiment of the present disclosure is described below.

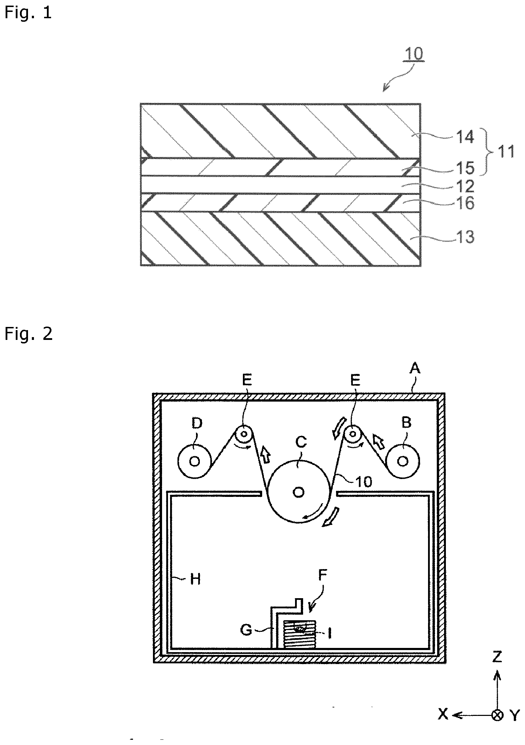

As illustrated in Fig. 1, a laminate 10 according to the present disclosure includes at least a first sealant layer 11, a vapor deposition film 12, and a second sealant layer 13 in this order. The first sealant layer 11 includes at least a polyethylene resin layer 14 and a surface resin layer 15. The vapor deposition film 12 is located on the surface resin layer 15 of the first sealant layer 11.

A laminate according to the present disclosure includes a polyethylene resin layer and a second sealant layer composed of a polyethylene resin. Such a laminate can be suitably used as a laminate to produce a mono-material packaging container. Furthermore, the laminate according to the first embodiment has significantly improved adhesion between the sealant layer and the vapor deposition film and has very high gas barrier properties.

The first sealant layer 11 may include an adhesive resin layer (not shown) between the polyethylene resin layer 14 and the surface resin layer 15.

In one embodiment, the laminate 10 may include a melt-extruded resin layer or an adhesive layer 16 between the vapor deposition film 12 and the second sealant layer 13.

The ratio of the polyethylene resin content to the total solid content of the laminate is preferably 95% or more by mass. This allows the laminate to be suitably used to produce a mono-material packaging container.

Each layer of the laminate 10 is described below.

### (First Sealant Layer)

The first sealant layer includes at least a polyethylene resin layer and a surface resin layer. In one embodiment, the first sealant layer includes an adhesive resin layer between the polyethylene resin layer and the surface resin layer.

The ratio of the thickness of the surface resin layer to the total thickness of the first sealant layer is preferably 1% or more and 20% or less, more preferably 2% or more and 10% or less.

When the ratio of the thickness of the surface resin layer to the total thickness of the first sealant layer is 1% or more, this can further improve the adhesiveness to a vapor deposition film and the gas barrier properties.

When the ratio of the thickness of the surface resin layer to the total thickness of the first sealant layer is 20% or less, the laminate can be suitably used to produce a mono-material packaging container.
This can also further improve the film-forming properties and processability of the sealant layer.

### (Polyethylene Resin Layer)

The term "polyethylene resin layer", as used herein, refers to a layer composed of a polyethylene resin.

The polyethylene resin may be a high-density polyethylene resin (HDPE), a medium-density polyethylene resin (MDPE), a low-density polyethylene resin (LDPE), a linear low-density polyethylene resin (LLDPE), or a very-low-density polyethylene resin (VLDPE).

The polyethylene resin may also be a copolymer of ethylene and another monomer.

The polyethylene resin may also be a biomass-derived polyethylene resin or a mechanically or chemically recycled polyethylene resin.

The high-density polyethylene resin may be a polyethylene resin with a density of 0.945 g/cm³ or more. The medium-density polyethylene resin may be a polyethylene resin with a density of 0.930 g/cm³ or more and less than 0.945 g/cm³. The low-density polyethylene resin may be a polyethylene resin with a density of 0.900 g/cm³ or more and less than 0.930 g/cm³. The linear low-density polyethylene resin may be a polyethylene resin with a density of 0.900 g/cm³ or more and less than 0.930 g/cm³. The very-low-density polyethylene resin may be a polyethylene resin with a density of less than 0.900 g/cm³.

The polyethylene resin content of the polyethylene resin layer is preferably 70% or more by mass, more preferably 80% or more by mass. This allows the laminate according to the first embodiment to be more suitably used to produce a mono-material packaging container.

The polyethylene resin layer of the first sealant layer may have a monolayer structure or a multilayer structure.

In one embodiment, the polyethylene resin layer may include at least one layer containing a compatibilizer.

When a packaging container produced from the laminate according to the first embodiment is melted by heating and is recycled, a compatibilizer in the polyethylene resin layer allows a resin material with a melting point of 150°C or more in the surface resin layer to be uniformly mixed with a polyethylene resin constituting the polyethylene resin layer and can thereby effectively prevent deterioration of physical properties. This can also effectively prevent loss of transparency.

In the polyethylene resin layer with a multilayer structure, the compatibilizer is preferably contained in a layer of the polyethylene resin layer in contact with the surface resin layer. The compatibilizer in the layer of the polyethylene resin layer in contact with the surface resin layer can further improve the effects described above.

The compatibilizer can be appropriately selected from known compatibilizers and is preferably an unsaturated carboxylic acid modified polyolefin resin, more preferably a maleic anhydride modified polyethylene resin, in terms of recyclability.

The compatibilizer content of the layer containing the compatibilizer is preferably 5% or more by mass and 30% or less by mass. When the compatibilizer content of the polyethylene resin layer is 5% or more by mass, the effects described above can be further improved. Furthermore, when the compatibilizer content of the polyethylene resin layer is 30% or less by mass, the strength and heat resistance of the first sealant layer can be improved.

Without losing the advantages of the present disclosure, the polyethylene resin layer may contain a resin material other than the polyethylene resin, for example, a polyolefin resin, such as a polypropylene resin, a (meth)acrylic resin, a vinyl resin, a cellulose resin, a polyamide resin, a polyester resin, or an ionomer resin. The polyethylene resin layer particularly preferably does not contain any resin other than the polyethylene resin in terms of recyclability.

Without losing the advantages of the present disclosure, the polyethylene resin layer may contain an additive agent, for example, a cross-linker, an antioxidant, an anti-blocking agent, a lubricant (slip) agent, an ultraviolet absorber, a light stabilizer, a filler, a reinforcing agent, an antistatic agent, a pigment, and/or a modifying resin.

In one embodiment, the polyethylene resin layer includes a layer composed of a linear low-density polyethylene resin, a layer composed of a high-density polyethylene resin, and a layer composed of a linear low-density polyethylene resin. Such a structure can improve heat-sealing properties and strength.

The thickness of the polyethylene resin layer is preferably 50 µm or more and 200 µm or less, more preferably 70 µm or more and 150 µm or less. The polyethylene resin layer with a thickness of 50 µm or more can further improve the laminate strength of a packaging container. The polyethylene resin layer with a thickness of 200 µm or less can improve the formability of the laminate and can be used to more easily produce a packaging container.

The polyethylene resin layer may include a print layer on its surface. An image to be formed on the print layer may be any image, such as a letter, a pattern, a symbol, or a combination thereof.

The print layer can be formed on the polyethylene resin layer using a biomass-derived ink. This can reduce the environmental load.

The print layer may be formed by any method, for example, by a known printing method, such as a gravure printing method, an offset printing method, or a flexographic printing method.

### (Surface Resin Layer)

The first sealant layer of the laminate according to the first embodiment includes a surface resin layer containing a resin material with a melting point of 150°C or more (hereinafter sometimes referred to as a high-melting-point resin material) on the polyethylene resin layer.

The high-melting-point resin material more preferably has a melting point of 160°C or more. The high-melting-point resin material with a melting point of 160°C or more can further improve the adhesiveness to a vapor deposition film and can further improve the gas barrier properties.

The high-melting-point resin material preferably has a melting point of 265°C or less, more preferably 260°C or less, still more preferably 250°C or less. The high-melting-point resin material with a melting point of 265°C or less can improve the film-forming properties of the first sealant layer.

The difference in melting point between the high-melting-point resin material contained in the surface resin layer and the polyethylene resin constituting the polyethylene resin layer preferably ranges from 20°C to 80°C, more preferably 20°C to 60°C. When the difference in melting point between the high-melting-point resin material contained in the surface resin layer and the polyethylene constituting the polyethylene resin layer is 20°C or more, this can further improve the adhesiveness to a vapor deposition film and can further improve the gas barrier properties of the first sealant layer on which the vapor deposition film is formed. When the difference in melting point between the high-melting-point resin material contained in the surface resin layer and the polyethylene constituting the polyethylene resin layer is 80°C or less, the film-forming properties of the first sealant layer can be further improved.

In one embodiment, the high-melting-point resin material is composed of a polymer with a polar group. The high-melting-point resin material composed of a polymer with a polar group can further improve the adhesiveness to a vapor deposition film.

In the present disclosure, the polar group refers to a group with at least one heteroatom, for example, an ester group, an epoxy group, a hydroxy group, an amino group, an amide group, a carboxy group, a carbonyl group, a carboxylic anhydride group, a sulfone group, a thiol group, or a halogen group.

Among these, from the perspective of the laminate strength of a packaging container, a hydroxy group, an ester group, an amino group, an amide group, a carboxy group, and a carbonyl group are preferred, and a hydroxy group is more preferred.

The high-melting-point resin material is, for example, a vinyl resin, a polyamide, a polyimide, a polyester, a (meth)acrylic resin, a cellulose resin, a polyolefin resin, or an ionomer resin.

In the present disclosure, a resin material with a melting point of 150°C or more and with a polar group is particularly preferred; an ethylene-vinyl alcohol copolymer, poly(vinyl alcohol), or an amide resin, such as nylon 6, nylon 6,6, a nylon 6-nylon 6,6 copolymer, MXD nylon, or amorphous nylon, is preferred; and an ethylene-vinyl alcohol copolymer or an amide resin is particularly preferred. The use of such a resin material can significantly improve the adhesiveness to a vapor deposition film to be formed on the surface resin layer and can effectively improve the gas barrier properties.

The high-melting-point resin material content of the surface resin layer is preferably 70% or more by mass, more preferably 80% or more by mass, still more preferably 90% or more by mass. When the high-melting-point resin material content of the surface resin layer is 70% or more by mass, this can significantly improve the adhesiveness to a vapor deposition film to be formed on the surface resin layer and can effectively improve the gas barrier properties of the sealant layer on which the vapor deposition film is formed.

Without losing the advantages of the present disclosure, the surface resin layer may contain a resin material other than the high-melting-point resin material. The surface resin layer preferably does not contain a resin material other than the high-melting-point resin material in terms of the adhesiveness to a vapor deposition film.

Without losing the advantages of the present disclosure, the surface resin layer may contain an additive agent, for example, a cross-linker, an antioxidant, an anti-blocking agent, a lubricant (slip) agent, an ultraviolet absorber, a light stabilizer, a filler, a reinforcing agent, an antistatic agent, a pigment, and/or a modifying resin.

The thickness of the surface resin layer is preferably 0.1 µm or more and 5 µm or less, more preferably 0.1 µm or more and 4 µm or less. The surface resin layer with a thickness of 0.1 µm or more can further improve the adhesiveness to a vapor deposition film and can further improve the gas barrier properties of the first sealant layer on which the vapor deposition film is formed. The surface resin layer with a thickness of 5 µm or less can constitute the first sealant layer that can be suitably used to produce a mono-material packaging container. This can also further improve the film-forming properties and processability of the first sealant layer.

The surface resin layer of the first sealant layer may be subjected to surface treatment. This can improve adhesiveness to an adjacent layer.

Any surface treatment method may be used, for example, physical treatment, such as corona discharge treatment, ozone treatment, low-temperature plasma treatment using oxygen gas and/or nitrogen gas, or glow discharge treatment, or chemical treatment, such as oxidation treatment using a chemical.

### (Adhesive Resin Layer)

In one embodiment, an adhesive resin layer can be provided between the polyethylene resin layer and the surface resin layer of the first sealant layer to improve the adhesion between these layers.

The adhesive resin layer can be formed of an adhesive resin, such as a polyether, a polyester, a silicone resin, an epoxy resin, a polyurethane, a vinyl resin, a phenolic resin, or a polyolefin. Among these, a polyolefin or an acid modified product thereof is preferred, and a polyethylene or an acid modified product thereof is particularly preferred, because this allows the laminate according to the first embodiment to have a structure more suitable for a mono-material packaging container.

A commercial product can be used as an adhesive polyethylene, for example, an Admer series manufactured by Mitsui Chemicals, Inc.

The thickness of the adhesive resin layer is, but not limited to, 1 µm or more and 15 µm or less, for example. The adhesive resin layer with a thickness of 1 µm or more can further improve the adhesion between the polyethylene resin layer and the surface resin layer. The adhesive layer with a thickness of 15 µm or less can improve the processability of the first sealant layer.

In one embodiment, the first sealant layer is a coextruded film and may be formed by a T-die method or an inflation method.

### (Vapor Deposition Film)

The laminate according to the first embodiment includes a vapor deposition film adjacent to the surface resin layer. In the laminate according to the first embodiment, the vapor deposition film and the surface resin layer are strongly bonded together and have very high gas barrier properties, more specifically, oxygen barrier properties and water vapor barrier properties. A packaging container produced from the laminate including the vapor deposition film can reduce the mass loss of the contents of the packaging container.

The vapor deposition film can be a vapor deposition film of inorganic substance(s) or inorganic oxide(s) of one or two or more of silicon (Si), aluminum (Al), magnesium (Mg), calcium (Ca), potassium (K), tin (Sn), sodium (Na), boron (B), titanium (Ti), lead (Pb), zirconium (Zr), and yttrium (Y). The vapor deposition film may have a structure composed of two or more layers and may be composed of the same material or different materials.

In particular, the vapor deposition film is preferably composed of aluminum, aluminum oxide (alumina), or silicon oxide (silica) in terms of adhesiveness to the surface resin layer and gas barrier properties. The vapor deposition film composed of aluminum can improve the gloss and design performance of a packaging container.

The surface of the vapor deposition film is preferably subjected to the surface treatment. This can improve adhesiveness to an adjacent layer.

The thickness of the vapor deposition film is preferably 1 nm or more and 150 nm or less, more preferably 5 nm or more and 60 nm or less, still more preferably 10 nm or more and 40 nm or less. The vapor deposition film with a thickness of 1 nm or more can further improve the oxygen barrier properties and water vapor barrier properties of the laminate. When the thickness of the vapor deposition film is 150 nm or less, the laminate can be suitably used to produce a mono-material packaging container. This can also prevent cracking in the vapor deposition film.

The vapor deposition film can be formed by a known method, for example, a physical vapor deposition method (PVD method), such as a vacuum deposition method, a sputtering method, or an ion plating method, or a chemical vapor deposition method (CVD method), such as a plasma chemical vapor deposition method, a thermal chemical vapor deposition method, or a photochemical vapor deposition method.

An embodiment of a method of forming a vapor deposition film is described below, but a vapor deposition film may be formed by another method.

An apparatus used for a method of forming a vapor deposition film by a PVD method can be a vacuum film-forming apparatus with plasma assistance. One embodiment of a method of forming a vapor deposition film using a vacuum film-forming apparatus with plasma assistance is described below.

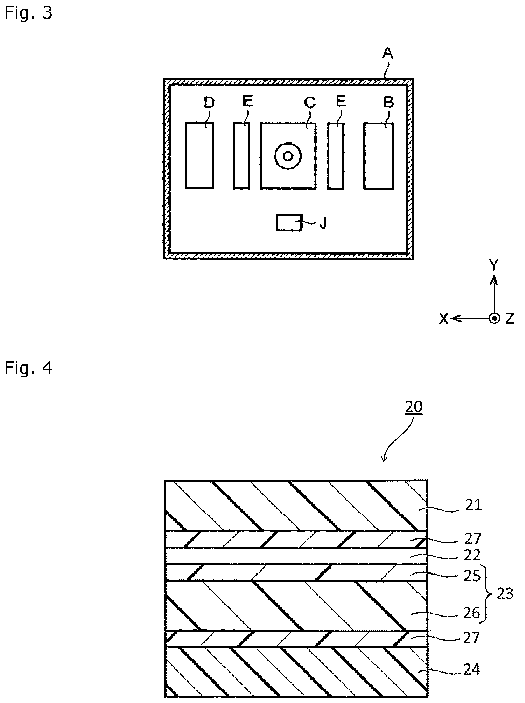

In one embodiment, as illustrated in Figs. 2 and 3, a vacuum film-forming apparatus includes a vacuum chamber A, the first sealant layer 11, an unwinder B, a film-forming drum C, a winder D, a feed roller E, an evaporation source F, a reaction gas supply unit G, an anti-deposition box H, a deposition material I, and a plasma gun J. Fig. 2 is a schematic cross-sectional view of the vacuum film-forming apparatus in the XZ plane direction. Fig. 3 is a schematic cross-sectional view of the vacuum film-forming apparatus in the XY plane direction.

As illustrated in Fig. 2, the first sealant layer 11 wound by the film-forming drum C method is placed in an upper portion of the vacuum chamber A with the surface resin layer thereof facing downward, and the anti-deposition box H electrically grounded is located below the film-forming drum C in the vacuum chamber A. The evaporation source F is located at the bottom of the anti-deposition box H. The film-forming drum C is placed in the vacuum chamber A such that a surface of the surface resin layer of the first sealant layer 11 wound by the film-forming drum C faces the upper surface of the evaporation source F with a predetermined distance therebetween.

The feed roller E is placed between the unwinder B and the film-forming drum C and between the film-forming drum C and the winder D. The vacuum chamber is coupled to a vacuum pump (not shown).

The evaporation source F holds the deposition material I and has a heater (not shown). The reaction gas supply unit G is a portion for supplying a reactant gas (oxygen, nitrogen, helium, argon, a gas mixture thereof, etc.) that reacts with the evaporated deposition material. The deposition material I heated and evaporated from the evaporation source F is diffused toward the surface resin layer of the first sealant 11, and simultaneously the surface resin layer is irradiated with plasma from the plasma gun J. Thus, a vapor deposition film is formed.

Details of this formation method are disclosed in Japanese Unexamined Patent Application Publication No. 2011-214089.

A plasma generator for use in the plasma chemical vapor deposition method may be a high-frequency plasma, pulse wave plasma, or microwave plasma generator. An apparatus with two or more film-forming chambers may also be used. Such an apparatus preferably has a vacuum pump to maintain a vacuum in each film-forming chamber.

The degree of vacuum in each film-forming chamber preferably ranges from 1 x 10 to 1 x 10⁻⁶ Pa. One embodiment of a method of forming a vapor deposition film using a plasma generator is described below. First, a first sealant layer is sent out to a film-forming chamber and is transported via an auxiliary roller to a cooling electrode drum at a predetermined speed.

Subsequently, a gas mixture composition that contains a film-forming monomer gas containing an inorganic oxide, an oxygen gas, an inert gas, and the like is supplied from a gas supply unit into a film-forming chamber, plasma is generated by glow discharge on a surface resin layer, and the surface coating layer is irradiated with the plasma. Thus, a vapor deposition film containing the inorganic oxide is formed on the surface resin layer.

Details of this formation method are disclosed in Japanese Unexamined Patent Application Publication No. 2012-076292.

An apparatus for use in a method of forming a vapor deposition film may be a continuous vapor-deposition-film-forming apparatus with a plasma pretreatment chamber and a film-forming chamber. One embodiment of a method of forming a vapor deposition film using the apparatus is described below.

First, in the plasma pretreatment chamber, the surface resin layer of the first sealant layer is irradiated with plasma from a plasma supply nozzle. In a film-forming chamber, a vapor deposition film is then formed on the plasma-treated surface resin layer.

Details of this formation method are disclosed in International Publication No. WO 2019/087960.

### (Second Sealant Layer)

The second sealant layer is composed of a polyethylene resin. A laminate with such a structure can be suitably used as a laminate to produce a mono-material packaging container.

The polyethylene resin may be a high-density polyethylene resin, a medium-density polyethylene resin, a low-density polyethylene resin, a linear low-density polyethylene resin, or a very-low-density polyethylene resin. The polyethylene resin may also be a copolymer of ethylene and another monomer. The polyethylene resin may also be a biomass-derived polyethylene resin or a mechanically or chemically recycled polyethylene resin.

Without losing the advantages of the present disclosure, the second sealant layer may contain the additive agent.

The second sealant layer may have a monolayer structure or a multilayer structure.

In one embodiment, the second sealant layer includes a layer composed of a linear low-density polyethylene resin, a layer composed of a high-density polyethylene resin, and a layer composed of a linear low-density polyethylene resin. Such a structure can improve heat-sealing properties and strength.

The thickness of the second sealant layer is preferably 50 µm or more and 200 µm or less, more preferably 70 µm or more and 150 µm or less. The second sealant layer with a thickness of 50 µm or more can further improve the laminate strength of a packaging container. The second sealant layer with a thickness of 200 µm or less can improve the formability of the laminate and can be used to more easily produce a packaging container.

The second sealant layer can be laminated with a vapor deposition film or the like via a melt-extruded resin layer or an adhesive layer described below.

### (Melt-Extruded Resin Layer and Adhesive Layer)

In one embodiment, the laminate according to the first embodiment includes a melt-extruded resin layer or an adhesive layer between the vapor deposition film and the second sealant layer.

A material constituting the melt-extruded resin layer or the adhesive layer may be a known resin material or adhesive agent. In terms of recyclability, a polyethylene resin or a polyethylene adhesive agent is preferably used to form a melt-extruded resin layer or an adhesive layer.

The thickness of the melt-extruded resin layer or the adhesive layer may be, but is not limited to, in the range of 1 to 30 µm, for example.

### (Barrier Coating Layer)

The laminate according to the first embodiment can further include a barrier coating layer on the vapor deposition film. More specifically, the barrier coating layer between the vapor deposition film and the second sealant layer can further improve the gas barrier properties of the laminate.

In one embodiment, the barrier coating layer is composed of a gas barrier resin, such as an ethylene-vinyl alcohol copolymer (EVOH), poly(vinyl alcohol), polyacrylonitrile, a polyamide resin, such as nylon 6, nylon 6,6, or poly(m-xylylene adipamide) (MXD6), a polyester resin, a polyurethane resin, or a (meth)acrylic resin.

The thickness of the barrier coating layer is preferably 0.01 µm or more and 10 µm or less, more preferably 0.1 µm or more and 5 µm or less. The barrier coating layer with a thickness of 0.01 µm or more can further improve the gas barrier properties. The barrier coating layer with a thickness of 10 µm or less can improve the processability of the laminate. This also allows the laminate to be suitably used to produce a mono-material packaging container.

The barrier coating layer can be formed by dissolving or dispersing the material in water or an appropriate solvent and applying and drying the solution or dispersion.

In another embodiment, the barrier coating layer is a gas barrier coating film containing at least one resin composition, such as a hydrolysate of a metal alkoxide or a hydrolytic condensate of a metal alkoxide, which is produced by polycondensation of a mixture of the metal alkoxide and a water-soluble polymer by a sol-gel method in the presence of a sol-gel method catalyst, water, an organic solvent, and the like. Such a barrier coating layer on the vapor deposition film can effectively prevent cracking in the vapor deposition film.

In one embodiment, the metal alkoxide is represented by the following general formula.

R¹ₙM(OR²)ₘ

(R¹ and R² independently denote an organic group having 1 to 8 carbon atoms, M denotes a metal atom, n denotes an integer of 0 or more, m denotes an integer of 1 or more, and n + m denotes the valence of M.)

The metal atom M may be silicon, zirconium, titanium, or aluminum, for example.

Examples of the organic groups represented by R¹ and R² include alkyl groups, such as a methyl group, an ethyl group, a n-propyl group, an i-propyl group, a n-butyl group, and an i-butyl group.

Examples of the metal alkoxide that satisfies the general formula include tetramethoxysilane (Si(OCH₃)₄), tetraethoxysilane (% by mass) (Si(OC₂H₅)₄), tetrapropoxysilane (Si(OC₃H₇)₄), and tetrabutoxysilane (Si(OC₄H₉)₄).

The metal alkoxide is preferably used together with a silane coupling agent. The silane coupling agent may be a known organoalkoxysilane with an organic reactive group.

The water-soluble polymer is preferably poly(vinyl alcohol) or an ethylene-vinyl alcohol copolymer, and poly(vinyl alcohol) and the ethylene-vinyl alcohol copolymer are preferably used in combination in terms of oxygen barrier properties, water vapor barrier properties, water resistance, and weatherability.

The thickness of the gas barrier coating film is preferably 0.01 µm or more and 10 µm or less, more preferably 0.1 µm or more and 5 µm or less. This can further improve the gas barrier properties. The gas barrier coating film with a thickness of 0.01 µm or more can improve the oxygen barrier properties and water vapor barrier properties of a barrier laminate. This can also prevent cracking in the vapor deposition film. The gas barrier coating film with a thickness of 10 µm or less can constitute the laminate that can be suitably used to produce a mono-material packaging container.

The gas barrier coating film can be formed by applying a composition containing the above materials by a known means, for example, by roll coating with a gravure roll coater, by spray coating, by spin coating, by dipping, with a brush, with a bar code, or with an applicator, and performing polycondensation of the composition by a sol-gel method. An acid or an amine compound is suitable for a sol-gel method catalyst.

The composition may further contain an acid. An acid is used as a catalyst for the sol-gel method, mainly as a catalyst for the hydrolysis of an alkoxide, a silane coupling agent, or the like.

The acid may be a mineral acid, such as sulfuric acid, hydrochloric acid, or nitric acid, or an organic acid, such as acetic acid or tartaric acid.

The composition may contain an organic solvent. Examples of the organic solvent include methyl alcohol, ethyl alcohol, n-propyl alcohol, isopropyl alcohol, and n-butanol.

One embodiment of a method of forming a gas barrier coating film is described below.

First, a metal alkoxide, a water-soluble polymer, a sol-gel method catalyst, water, an organic solvent, and, if necessary, a silane coupling agent are mixed to prepare a composition. A polycondensation reaction progresses gradually in the composition.

The composition is then applied to the vapor deposition film and is dried by the known method described above. The drying further promotes the polycondensation reaction of the alkoxide and the water-soluble polymer (and the silane coupling agent when the composition contains the silane coupling agent), thus forming a layer of a composite polymer. Finally, the gas barrier coating film can be formed by heating.

### [Second Embodiment]

A second embodiment of the present disclosure is described below.

As illustrated in Fig. 4, a laminate 20 according to the second embodiment includes at least a first sealant layer 21, a vapor deposition film 22, a substrate 23, and a second sealant layer 24.

A polyethylene resin layer of the substrate, the first sealant layer, and the second sealant layer in the laminate are composed of the same resin, that is, the polyethylene resin. The laminate with such a structure can be suitably used as a laminate to produce a mono-material packaging container.

Furthermore, the laminate according to the second embodiment has significantly improved adhesion between the substrate and the vapor deposition film and has very high gas barrier properties.

The substrate 23 includes at least a surface resin layer 25 and a polyethylene resin layer 26. The substrate 23 may include an adhesive resin layer (not shown) between the surface resin layer 25 and the polyethylene resin layer 26.

In one embodiment, the laminate 20 may include a melt-extruded resin layer or an adhesive layer 27 between the first sealant layer 21 and the vapor deposition film 22 and between the substrate 23 and the second sealant layer 24.

The ratio of the polyethylene resin content to the total solid content of the laminate is preferably 95% or more by mass. This allows the laminate to be suitably used to produce a mono-material packaging container. Each layer of the laminate 20 is described below.

### (Substrate)

The substrate includes at least a polyethylene resin layer and a surface resin layer. In one embodiment, the substrate includes an adhesive resin layer between the polyethylene resin layer and the surface resin layer.

The ratio of the thickness of the surface resin layer to the total thickness of the substrate is preferably 2% or more and 20% or less, more preferably 4% or more and 15% or less. When the ratio of the thickness of the surface resin layer to the total thickness of the substrate is 2% or more, this can further improve the adhesiveness to a vapor deposition film and the gas barrier properties. When the ratio of the thickness of the surface resin layer to the total thickness of the substrate is 20% or less, the laminate can be suitably used to produce a mono-material packaging container. This can also further improve the film-forming properties and processability of the substrate.

### (Polyethylene Resin Layer)

The polyethylene resin layer is composed of a polyethylene resin. The polyethylene resin may be the polyethylene resin described for the laminate according to the first embodiment. Thus, it is not described here.

The polyethylene resin layer of the substrate may have a monolayer structure or a multilayer structure.

In the polyethylene resin layer with a multilayer structure, the polyethylene resin constituting each layer may have different densities, that is, the polyethylene resin layer may have a density gradient. The polyethylene resin layer with a density gradient has significantly improved strength, heat resistance, and stretchability.

In the polyethylene resin layer with a density gradient, a large density difference between layers may cause separation (delamination) at an interface. Thus, the density difference between layers is preferably 0.04 g/cm³ or less, more preferably 0.02 g/cm³ or less.

Embodiments of the polyethylene resin layer with a density gradient are described below. The structure of the polyethylene resin layer is not limited to these embodiments.

In one embodiment, the polyethylene resin layer with a density gradient is composed of three layers: a layer containing a high-density polyethylene resin, a layer containing a medium-density polyethylene resin, and a layer containing a high-density polyethylene resin. The polyethylene resin layer with a density gradient composed of the three layers has significantly improved strength, heat resistance, and stretchability. This can also effectively prevent the substrate from being curled.

In one embodiment, the polyethylene resin layer with a density gradient includes five layers: a layer containing a high-density polyethylene, a layer containing a medium-density polyethylene resin, a layer containing at least one of a low-density polyethylene resin and a linear low-density polyethylene resin, a layer containing a medium-density polyethylene resin, and a layer containing a high-density polyethylene resin. The polyethylene resin layer with a density gradient composed of the five layers has significantly improved strength, heat resistance, and stretchability. This can also effectively prevent the substrate from being curled.

The polyethylene resin layer with such a structure can be consistently produced by an inflation method, as described below.

More specifically, a high-density polyethylene resin, a medium-density polyethylene resin, and at least one of a low-density polyethylene resin and a linear low-density polyethylene resin from the outside are coextruded in a tubular form, and
layers containing at least one of a low-density polyethylene resin and a linear low-density polyethylene resin are then pressure-bonded with a rubber roller or the like.

Production by such a method can significantly decrease the number of defective products in the production and finally improve production efficiency.

In one embodiment, the polyethylene resin layer with a density gradient includes seven layers: a layer containing a high-density polyethylene resin, a layer containing a blend resin of a high-density polyethylene resin and a medium-density polyethylene resin, a layer containing at least one of a low-density polyethylene resin and a linear low-density polyethylene resin, a layer containing a blend resin of a high-density polyethylene resin and a medium-density polyethylene resin, and a layer containing a high-density polyethylene resin.

The polyethylene resin layer with a density gradient composed of the five layers has significantly improved strength, heat resistance, and stretchability. This can also effectively prevent the substrate from being curled. This can also effectively prevent delamination of the substrate.

The polyethylene resin layer with such a structure can be consistently produced by the inflation method described above.

The thickness of the polyethylene resin layer is preferably 10 µm or more and 50 µm or less, more preferably 10 µm or more and 40 µm or less. The polyethylene resin layer with a thickness of 10 µm or more can further improve the strength and heat resistance of the substrate. The polyethylene resin layer with a thickness of 50 µm or less can further improve the film-forming properties and processability of the substrate.

The polyethylene resin layer may have a print layer on its surface. The print layer may be the same as that of the laminate according to the first embodiment. Thus, the print layer is not described here.

### (Surface Resin Layer)

The substrate of the laminate according to the second embodiment includes a surface resin layer containing a resin material with a melting point of 150°C or more on the polyethylene resin layer. The surface resin layer may be the same as that of the laminate according to the first embodiment. Thus, the surface resin layer is not described here.

### (Adhesive Resin Layer)

In one embodiment, the substrate may include an adhesive resin layer between the polyethylene resin layer and the surface resin layer. The adhesive resin layer can improve the adhesion between the polyethylene resin layer and the surface resin layer. The adhesive resin layer may be the same as that of the laminate according to the first embodiment. Thus, the adhesive resin layer is not described here.

The substrate is subjected to stretching, which may be uniaxial stretching or biaxial stretching. The stretch ratio of the substrate in the machine direction (MD) and the transverse direction (TD) is preferably 2 or more and 15 or less, more preferably 5 or more and 13 or less.

The substrate can have further improved strength and heat resistance at a stretch ratio of 2 or more. The printability of the substrate can also be improved. The stretch ratio is preferably 15 or less in terms of the fracture limit of the substrate.

In one embodiment, the substrate is a coextruded film and may be produced by forming a resin film by the T-die method or the inflation method and stretching the resin film. Forming a film by the inflation method can simultaneously stretch the resin film.

### (First Sealant Layer and Second Sealant Layer)

The sealant layers contain the same resin as the polyethylene resin layer of the substrate, that is, the polyethylene resin. A laminate with such a structure can be suitably used as a laminate to produce a mono-material packaging container.

The polyethylene resin may be a high-density polyethylene resin (HDPE), a medium-density polyethylene resin (MDPE), a low-density polyethylene resin (LDPE), a linear low-density polyethylene resin (LLDPE), or a very-low-density polyethylene resin (VLDPE).

The polyethylene resin may also be a copolymer of ethylene and another monomer. The polyethylene resin may also be a biomass-derived polyethylene resin or a mechanically or chemically recycled polyethylene resin.

Without losing the advantages of the present disclosure, the sealant layers may contain the additive agent.

The sealant layers may have a monolayer structure or a multilayer structure.

In an embodiment of the present disclosure, the sealant layers include a layer composed of a low-density polyethylene resin, a layer composed of a high-density polyethylene resin, and a layer composed of a low-density polyethylene resin. Such a structure can improve heat-sealing properties and strength.

The sealant layers preferably have a thickness of 20 µm or more and 100 µm or less, more preferably 30 µm or more and 70 µm or less. The sealant layers with a thickness of 20 µm or more can further improve the laminate strength of a packaging container. The sealant layers with a thickness of 100 µm or less can improve the formability of the laminate and can be used to more easily produce a packaging container.

The sealant layers may have a print layer on their surfaces. Any image, such as a letter, a pattern, a symbol, or a combination thereof, may be formed on the print layer. The print layer can be formed on the sealant layers using a biomass-derived ink. This can reduce the environmental load.

The print layer may be formed by any method, for example, by a known printing method, such as a gravure printing method, an offset printing method, or a flexographic printing method.

The sealant layers can be laminated with the substrate or the like via a melt-extruded resin layer or an adhesive layer described below.

The first sealant layer and the second sealant layer of the laminate according to the second embodiment may have the same structure or different structures.

### (Vapor Deposition Film)

The laminate according to the second embodiment includes a vapor deposition film adjacent to the surface resin layer. In the laminate according to the second embodiment, the vapor deposition film and the surface resin layer are strongly bonded together and have very high gas barrier properties, more specifically, oxygen barrier properties and water vapor barrier properties. A packaging container produced from the laminate including the vapor deposition film can reduce the mass loss of the contents of the packaging container. The vapor deposition layer may be the same as that of the laminate according to the first embodiment. Thus, the vapor deposition layer is not described here.

### (Melt-Extruded Resin Layer and Adhesive Layer)

In one embodiment, the laminate includes a melt-extruded resin layer or an adhesive layer between the first sealant layer and the vapor deposition film or between the substrate and the second sealant layer.

A material constituting the melt-extruded resin layer or the adhesive layer may be a known resin material or adhesive agent. In terms of recyclability, a polyethylene resin or a polyethylene adhesive agent is preferably used to form a melt-extruded resin layer or an adhesive layer.

The thickness of the melt-extruded resin layer or the adhesive layer may be, but is not limited to, in the range of 1 to 30 µm, for example.

### (Barrier Coating Layer)

The laminate may further include a barrier coating layer on the vapor deposition film. More specifically, a barrier coating layer between the first sealant layer and the vapor deposition film (that is, a barrier coating layer on a side of the vapor deposition film opposite the side in contact with the surface resin layer) can further improve the gas barrier properties of the laminate. The barrier coating layer may be the same as that of the laminate according to the first embodiment. Thus, the barrier coating layer is not described here.

### [Third Embodiment]

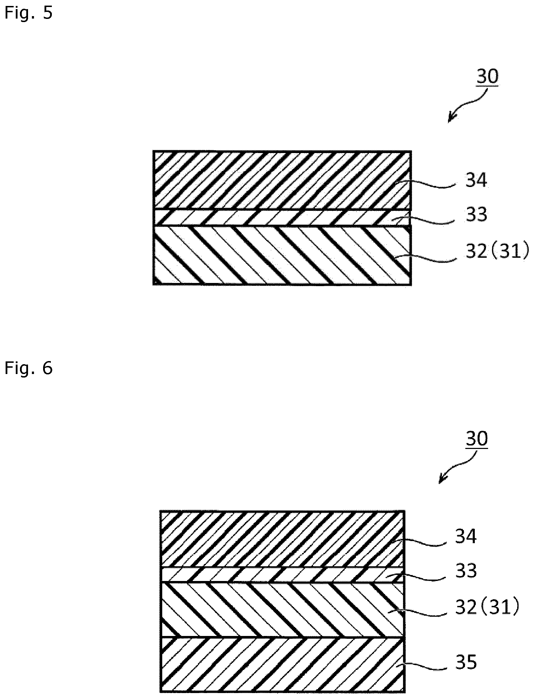

As illustrated in Fig. 5, a laminate 30 according to a third embodiment includes a substrate 31, a vapor deposition film 33, and a first sealant layer 34.

In one embodiment, as illustrated in Fig. 6, the laminate 30 includes a second sealant layer 35 on the substrate 31 opposite the first sealant layer 34. The laminate 30 may include a barrier coating layer (not shown) on the vapor deposition film 33.

The ratio of the polyethylene content to the total solid content of the laminate 30 is preferably 80% or more by mass, more preferably 90% or more by mass. This allows the laminate to be suitably used to produce a mono-material packaging container.

Each layer of the laminate 30 is described below.

### (Substrate)

The substrate includes a polyethylene resin layer. When the substrate and a sealant layer described later are composed of the same resin material, the laminate can be used as a material with high recyclability for a mono-material packaging container or the like.

The substrate includes a first polyethylene resin layer composed of a polyethylene resin and an olefin elastomer resin as a layer on which a vapor deposition film is to be formed. The polyethylene resin may be a high-density polyethylene resin (HDPE), a medium-density polyethylene resin (MDPE), a low-density polyethylene resin (LDPE), a linear low-density polyethylene resin (LLDPE), or a very-low-density polyethylene resin (VLDPE).

The polyethylene resin may also be a copolymer of ethylene and another monomer. The polyethylene resin may also be a biomass-derived polyethylene resin or a mechanically or chemically recycled polyethylene resin.

The first polyethylene resin layer may contain a polyethylene resin with a density of 0.970 g/cm³ or less. The polyethylene resin with a density of 0.970 g/cm³ or less in the first polyethylene resin layer can further significantly improve the adhesiveness to a vapor deposition film.

The melting point of the polyethylene resin in the first polyethylene resin layer is preferably 110°C or more and 140°C or less, more preferably 115°C or more and 135°C or less. A melting point of 110°C or more results in improved processability in terms of heat resistance in the production of the laminate. A melting point of 140°C or less tends to result in a smaller difference in the melting point of each layer of the multilayer structure, which facilitates stretching at a constant temperature.

The MFR of the polyethylene resin in the first polyethylene resin layer is preferably 0.1 g/10 min or more and 5 g/10 min or less, more preferably 0.2 g/10 min or more and 4 g/10 min or less. A MFR of 0.1 g/10 min or more and 5 g/10 min or less results in stable film-forming properties in the inflation method.

The polyethylene resin content of the first polyethylene resin layer is preferably 60% or more by mass and 99% or less by mass, more preferably 70% or more by mass and 95% or less by mass. When the polyethylene resin content of the first polyethylene resin layer is 60% or more by mass, the laminate can be suitably used to produce a mono-material packaging container. When the polyethylene resin content of the first polyethylene resin layer is 99% or less by mass, a sufficient amount of olefin elastomer resin can be contained in the first polyethylene resin layer and can improve the adhesiveness to a vapor deposition film.

In one embodiment, the olefin elastomer resin is an ethylene elastomer resin. The use of the ethylene elastomer resin as the olefin elastomer resin allows the laminate to be suitably used to produce a mono-material packaging container.

In one embodiment, the olefin elastomer resin is an olefin block copolymer. The olefin block copolymer contained as an olefin elastomer resin in the first polyethylene resin layer can further improve the adhesion between the vapor deposition film and the first polyethylene resin layer.

A block copolymer includes a sequence (block or segment) of the same monomer units covalently bonded to a different type of sequence. A block copolymer has, for example, a diblock structure A-B or a triblock structure A-B-A (wherein A denotes one block and B denotes a different block or segment). A multiblock copolymer can include A and B coupled in many different ways and repeated multiple times. An additional block or segment of a different type may also be further included. The multiblock copolymer may be a linear multiblock polymer or a multiblock star polymer (all blocks or segments are bonded to one atom or chemical moiety).

In one embodiment, the olefin block copolymer is an ethylene block copolymer, preferably an ethylene multiblock copolymer. The use of the ethylene block copolymer as the olefin block copolymer allows the laminate to be suitably used to produce a mono-material packaging container.

In one embodiment, the ethylene block copolymer is an ethylene/α-olefin interpolymer, which can further improve the adhesion between the vapor deposition film and the first polyethylene resin layer. The ethylene/α-olefin interpolymer includes ethylene and at least one copolymerizable α-olefin monomer in polymerized form. The term "interpolymer", as used herein, refers to a polymer prepared by polymerization of at least two types of monomers. Thus, interpolymers include copolymers, which are polymers of two types of monomers, terpolymers, which are polymers of three types of monomers, and polymers of four or more types of monomers.

In one embodiment, the ethylene/α-olefin interpolymer, which is an ethylene block copolymer, includes a hard block (hard segment) composed of polyethylene and a soft block (soft segment) composed of an α-olefin monomer.

Examples of the α-olefin monomer constituting the interpolymer include propylene, 1-butene, 1-pentene, 3-methyl-1-butene, 1-hexene, 4-methyl-1-pentene, 3-methyl-1-pentene, 1-octene, 1-decene, 1-dodecene, 1-tetradecene, 1-hexadecene, 1-eicosene, cyclopentene, cycloheptene, norbornene, 5-methyl-2-norbornene, tetracyclododecene, 2-methyl-1,4,5,8-dimethano-1,2,3,4,4a,5,8,8a-octahydronaphthalene, butadiene, isoprene, 4-methyl-1,3-pentadiene, 1,3-pentadiene, 1,4-pentadiene, 1,5-hexadiene, 1,4-hexadiene, 1,3-hexadiene, 1,3-octadiene, 1,4-octadiene, 1,5-octadiene, 1,6-octadiene, 1,7-octadiene, ethylidene norbornene, vinyl norbornene, dicyclopentadiene, 7-methyl-1,6-octadiene, 4-ethylidene-8-methyl-1,7-nonadiene, 5,9-dimethyl-1,4,8-decatriene, 3-phenylpropene, 4-phenylpropene, 1,2-difluoroethylene, tetrafluoroethylene, styrene, and 3,3,3-trifluoro-1-propene.

The olefin elastomer resin may be a commercial olefin elastomer resin. For example, an olefin block copolymer with a hard block composed of polyethylene and a soft block composed of an α-olefin monomer may be INFUSE 9100 manufactured by The Dow Chemical Company.

Tafmer A-4085S manufactured by Mitsui Chemicals, Inc. may also be used.

The olefin elastomer resin content of the first polyethylene resin layer is preferably 1% or more by mass and 40% or less by mass, more preferably 5% or more by mass and 30% or less by mass. When the olefin elastomer resin content of the first polyethylene resin layer is 1% or more by mass, the adhesion between the first polyethylene resin layer and the vapor deposition film can be further improved. When the olefin elastomer resin content of the first polyethylene resin layer is 40% or less by mass, the laminate can be suitably used to produce a mono-material packaging container.

Without losing the advantages of the present disclosure, the first polyethylene resin layer can contain a resin material other than the polyethylene resin (another resin material). In terms of the adhesiveness to a vapor deposition film and recyclability, the first polyethylene resin layer preferably does not contain any other resin material.

Without losing the advantages of the present disclosure, the first polyethylene resin layer may contain an additive agent, for example, a cross-linker, an antioxidant, an anti-blocking agent, a lubricant (slip) agent, an ultraviolet absorber, a light stabilizer, a filler, a reinforcing agent, an antistatic agent, a pigment, and/or a modifying resin.

The other polyethylene resin layer is composed of a polyethylene resin. The polyethylene resin may be the same as that of the laminate according to the first embodiment and the second embodiment.

The substrate may be a monolayer or multilayer including a polyethylene resin layer. The substrate with a multilayer structure may be the same as that of the laminate according to the second embodiment. An example of the substrate of the laminate according to the third embodiment may be the following embodiment.
(a) In one embodiment, the substrate with a multilayer structure has a five-layer structure with a first polyolefin resin layer, a second polyethylene resin layer composed of a medium-density polyethylene resin, a third polyethylene resin layer composed of a linear low-density polyethylene resin, a fourth polyethylene resin layer composed of a medium-density polyethylene resin, and a fifth polyolefin resin layer composed of a high-density polyethylene resin.
(b) In one embodiment, the substrate with a multilayer structure has a seven-layer structure with a first polyethylene resin layer, a second resin layer composed of a blend resin of a high-density polyethylene resin and a medium-density polyethylene resin, a third polyethylene resin layer composed of a medium-density polyethylene resin, a fourth polyethylene resin layer composed of a linear low-density polyethylene resin, a fifth polyethylene resin layer composed of a medium-density polyethylene resin, a sixth resin layer composed of a blend resin of a high-density polyethylene resin and a medium-density polyethylene resin, and a seventh polyolefin resin layer composed of a high-density polyethylene resin.
(c) In one embodiment, the substrate with a multilayer structure has a three-layer structure with a first polyethylene resin layer, a second polyethylene resin layer composed of a linear low-density polyethylene resin, and a third polyolefin resin layer composed of a medium-density polyethylene resin.
(d) In one embodiment, the substrate with a multilayer structure has a two-layer structure with a first polyethylene resin layer and a second polyolefin resin layer composed of a medium-density polyethylene resin.
(e) In one embodiment, the substrate with a multilayer structure has a five-layer structure with a first polyethylene resin layer containing an olefin elastomer resin, a second polyolefin resin layer composed of a medium-density polyethylene resin, a third polyolefin resin layer composed of a linear low-density polyethylene resin, a fourth polyolefin resin layer composed of a medium-density polyethylene resin, and a fifth polyolefin resin layer composed of an olefin elastomer resin and a medium-density polyethylene resin.

One embodiment of the substrate with a multilayer structure produced by a coextrusion method as described above is, for example, a 10-layer multilayer film produced by melting resins by heating with an extruder, forming a five-layer laminate composed of first to fifth polyethylene resin layers by a feed block method, forming a tube film by the inflation method, and pressure-bonding the inside of the tube film with a rubber roller or the like. The multilayer film thus produced has a vertically symmetrical layer structure in the cross-sectional thickness direction. More specifically, for example, a laminated film with five layers composed of first to fifth polyethylene resin layers laminated with a coextruder becomes a substrate with a ten-layer structure composed of the first/second/third/fourth/fifth/fifth/fourth/third/second/first polyethylene resin layers in order from the surface. However, actually, the two adjacent fifth polyethylene resin layers in the middle in the thickness cross-sectional direction can be regarded as one layer. Thus, the substrate can practically have a multilayer structure composed of nine layers consisting of the first/second/third/fourth/fifth/fourth/third/second/first polyethylene resin layers.

A film with a multilayer structure produced by such a method is sometimes referred to as a "block film". Such a production method can significantly decrease the number of defective products in the production and finally improve production efficiency.

The thickness of the substrate with a monolayer or multilayer structure is preferably 1 µm or more and 60 µm or less, more preferably 9 µm or more and 60 µm or less, still more preferably 12 µm or more and 50 µm or less. The substrate with a thickness of 1 µm or more can have improved heat resistance and strength. The substrate with a thickness of 60 µm or less can have improves processability.

### (First and Second Sealant Layers)

The first and second sealant layers are composed of a polyolefin, for example, a polyethylene resin, a polypropylene resin, polymethylpentene, an ethylene-propylene copolymer, or a propylene-butene copolymer, preferably a polyethylene resin in terms of recyclability.

In one embodiment, the first and second polyolefin resin layers contain a compatibilizer. When a packaging container produced from the laminate is melted by heating and is recycled, the compatibilizer allows a gas barrier resin to be uniformly mixed with a polyethylene resin and can thereby effectively prevent deterioration of physical properties. This can also effectively prevent loss of transparency.

The compatibilizer can be appropriately selected from known compatibilizers and is preferably an unsaturated carboxylic acid modified polyolefin resin, more preferably a maleic anhydride modified polyethylene resin, in terms of recyclability.

The compatibilizer content of the first and second polyolefin resin layers is preferably 5% or more by mass and 30% or less by mass. When the compatibilizer content of the first and second polyolefin resin layers is 5% or more by mass, the above effects can be further improved. When the compatibilizer content of the first and second polyolefin resin layers is 30% or less by mass, the strength and heat resistance of the substrate can be improved.

Without losing the advantages of the present disclosure, the first and second polyethylene resin layers may contain a resin material other than polyolefin resins, for example, a (meth)acrylic resin, a vinyl resin, a cellulose resin, a polyamide resin, a polyester resin, or an ionomer resin.

The first and second polyolefin resin layers particularly preferably do not contain any resin other than the polyethylene resin in terms of recyclability.

Without losing the advantages of the present disclosure, the first and second polyethylene resin layers may contain the additive agent.

The first and second polyolefin resin layers preferably have a thickness of 5 µm or more and 100 µm or less, more preferably 10 µm or more and 50 µm or less. The polyolefin resin layer with a thickness of 5 µm or more can improve the strength and heat resistance of the laminate. The polyolefin resin layer with a thickness of 100 µm or less can improve the processability of the laminate.

The first and second polyolefin resin layers may have the same structure or different structures.

### (Barrier Coating Layer)

The laminate according to the third embodiment can further include a barrier coating layer on the vapor deposition film (between the first sealant layer and the vapor deposition film or between the vapor deposition film and the substrate). This can improve the gas barrier properties of the laminate. The barrier coating layer may be the same as that of the laminates according to the first embodiment and the second embodiment. Thus, the barrier coating layer is not described here.

The laminate according to the third embodiment may include a gas barrier layer between the substrate and the second sealant layer. This can further improve the gas barrier properties of the laminate.

The gas barrier layer includes at least a layer containing a gas barrier resin. The gas barrier resin is, for example, an ethylene-vinyl alcohol copolymer (EVOH), poly(vinyl alcohol), polyacrylonitrile, a polyamide, such as nylon 6, nylon 6,6 or poly(m-xylylene adipamide) (MXD6), a polyester, a polyurethane, or a (meth)acrylic resin. Among these, EVOH is preferred in terms of oxygen barrier properties and water vapor barrier properties.

The gas barrier resin content of the layer containing a gas barrier resin is preferably 50% or more by mass, more preferably 75% or more by mass.

When the gas barrier resin content of the layer containing a gas barrier resin is 50% or more by mass, the oxygen barrier properties and water vapor barrier properties of the laminate can be further improved.

Without losing the advantages of the present disclosure, the layer containing a gas barrier resin may contain the additive agent.

The thickness of the layer containing a gas barrier resin is preferably 0.5 µm or more and 20 µm or less, more preferably 1 µm or more and 16 µm or less. When the thickness of the layer containing a gas barrier resin is 0.5 µm or more, the laminate can have improved oxygen barrier properties and water vapor barrier properties. When the thickness of the layer containing a gas barrier resin is 20 µm or less, the laminate can be suitably used to produce a mono-material packaging container.

In one embodiment, the gas barrier layer may have a multilayer structure described for a laminate according to a fourth embodiment.

### [Fourth Embodiment]

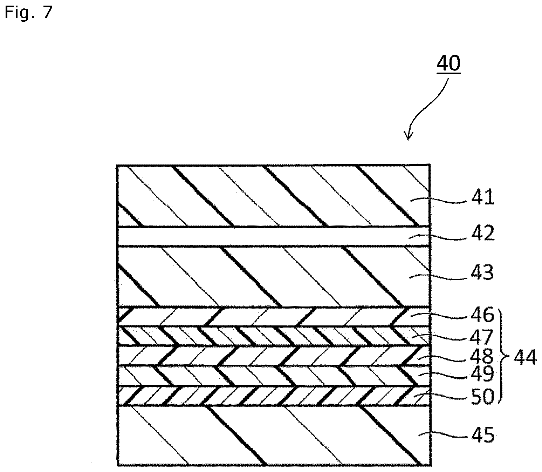

As illustrated in Fig. 7, a laminate 40 according to a fourth embodiment includes at least a first sealant layer 41, a vapor deposition film 42, a substrate 43, a gas barrier layer 44, and a second sealant layer 45.

The substrate, the first sealant layer, and the second sealant layer in the laminate are composed of the same resin, that is, the polyethylene resin. The laminate with such a structure can be suitably used as a laminate to produce a mono-material packaging container. Furthermore, the laminate according to the fourth embodiment has significantly improved adhesion between the substrate and the vapor deposition film and has very high gas barrier properties.

The ratio of the polyethylene resin content to the total solid content of the laminate is preferably 90% or more by mass. This allows the laminate to be suitably used to produce a mono-material packaging container. Each layer of the laminate 10 is described below.

### (Substrate)

The substrate includes a polyethylene resin layer in the same manner as the first and second sealant layers composed of a polyethylene resin described later. When the substrate and the sealant layers are composed of the same resin material, the laminate can be used as a material with high recyclability for a mono-material packaging container or the like.

The substrate may be a monolayer or multilayer including a polyethylene resin layer. A multilayer substrate can be produced by a coextrusion method in which polyolefin resins, such as a polyethylene resin, are melted by heating in their respective extruders, are laminated in the molten state by a coextrusion multilayer die method, a feed block method, or the like, and are formed into a film by the inflation method or the T-die method.

For example, a substrate with a multilayer structure formed by the coextrusion method may include a first polyethylene resin layer in contact with the vapor deposition film, a second polyethylene resin layer, a third polyethylene resin layer, a fourth polyethylene resin layer, and the like (hereinafter sometimes referred to as "another polyethylene resin layer") in this order. The other polyethylene resin layer can improve the heat resistance, strength, transparency, stretchability, and the like of the laminate.

In the laminate according to the fourth embodiment, the substrate is subjected to stretching. This can improve the strength and heat resistance of the substrate. This can also improve printability.

The stretching may be uniaxial stretching or biaxial stretching.

The stretch ratio of the substrate in the machine direction (MD) and the transverse direction (TD) is preferably 2 or more and 15 or less, more preferably 3 or more and 10 or less.

The substrate can have further improved strength and heat resistance at a stretch ratio of 2 or more. The printability of the substrate can also be improved. The stretch ratio is preferably 15 or less in terms of the fracture limit of the substrate.

In a first aspect, the substrate includes a polyethylene resin layer composed of a polyethylene resin with a density of 0.943 g/cm³ or less as a layer on which a vapor deposition film is to be formed.

The polyethylene resin with a density of 0.943 g/cm³ or less in the polyethylene resin layer may be a biomass-derived polyethylene resin or a mechanically or chemically recycled polyethylene resin.

The amount of the polyethylene resin with a density of 0.943 g/cm³ or less in the polyethylene resin layer is preferably 50% or more by mass, more preferably 70% or more by mass, still more preferably 80% or more by mass, particularly preferably 90% or more by mass. When the amount of the polyethylene resin with a density of 0.943 g/cm³ or less in the polyethylene resin layer is 50% or more by mass, the adhesion to the vapor deposition film can be further significantly improved.

The melting point of the polyethylene resin with a density of 0.943 g/cm³ or less in the polyethylene resin layer is preferably 60°C or more and 135°C or less, more preferably 65°C or more and 130°C or less. At a melting point of 60°C or more, the printability, strength, and heat resistance of the substrate can be further improved. At a melting point of 135°C or less, a difference in appropriate stretching temperature of each layer can be decreased.

The MFR of the polyethylene resin with a density of 0.943 g/cm³ or less in the polyethylene resin layer is preferably 0.1 g/10 min or more and 5 g/10 min or less, more preferably 0.2 g/10 min or more and 4 g/10 min or less. A MFR of 0.1 g/10 min or more and 5 g/10 min or less results in stable film-forming properties in the inflation method.

Without losing the advantages of the present disclosure, the polyethylene resin layer may contain a resin material other than the polyethylene resin with a density of 0.943 g/cm³ or less (another resin material). The polyethylene resin layer preferably does not contain the other resin material in terms of the adhesiveness to the vapor deposition film.

Without losing the advantages of the present disclosure, the polyethylene resin layer may contain an additive agent, for example, a cross-linker, an antioxidant, an anti-blocking agent, a lubricant (slip) agent, an ultraviolet absorber, a light stabilizer, a filler, a reinforcing agent, an antistatic agent, a pigment, and/or a modifying resin.

In the substrate with a multilayer structure, the densities of polyethylene resins constituting adjacent layers may be the same or different. In other words, the polyethylene resin layer constituting the substrate may have a density gradient. Such a substrate may be the same as that of the laminate according to the third embodiment.

### (Vapor Deposition Film)

The laminate includes the vapor deposition film on the polyethylene resin layer of the substrate. This can improve the gas barrier properties, more specifically, oxygen barrier properties and water vapor barrier properties, of the laminate. The vapor deposition film may be the same as that of the laminate according to the third embodiment. Thus, the vapor deposition layer is not described here.

### (First and Second Sealant Layers)

The first and second sealant layers constituting the laminate according to the fourth embodiment may be the same as the first and second sealant layers of the laminate according to the third embodiment. Thus, the first and second sealant layers are not described here.

### (Gas Barrier Layer)

The laminate according to the fourth embodiment includes a gas barrier layer. This can improve the gas barrier properties of the laminate. The gas barrier layer may be the same as the gas barrier layer of the laminate according to the third embodiment.

In one embodiment, the gas barrier layer may have a multilayer structure. As illustrated in Fig. 7, the gas barrier layer 44 has a five-layer structure composed of a first polyolefin resin layer 46, an adhesive resin layer 47, a layer 48 containing a gas barrier resin, an adhesive resin layer 49, and a second polyolefin resin layer 50. The adhesive resin layer and the layer containing a gas barrier resin may be the same as those described above.

### (First and Second Polyolefin Resin Layers)

The first and second polyolefin resin layers are composed of a polyolefin, for example, a polyethylene resin, a polypropylene resin, polymethylpentene, an ethylene-propylene copolymer, or a propylene-butene copolymer, preferably a polyethylene resin in terms of recyclability.

In one embodiment, the first and second polyolefin resin layers contain a compatibilizer. When a packaging container produced from the laminate is melted by heating and is recycled, the compatibilizer allows a gas barrier resin to be uniformly mixed with a polyethylene resin and can thereby effectively prevent deterioration of physical properties. This can also effectively prevent loss of transparency.

The compatibilizer can be appropriately selected from known compatibilizers and is preferably an unsaturated carboxylic acid modified polyolefin resin, more preferably a maleic anhydride modified polyethylene resin, in terms of recyclability.

The compatibilizer content of the first and second polyolefin resin layers is preferably 5% or more by mass and 30% or less by mass. When the compatibilizer content of the first and second polyolefin resin layers is 5% or more by mass, the above effects can be further improved. When the compatibilizer content of the first and second polyolefin resin layers is 30% or less by mass, the strength and heat resistance of the substrate can be improved.

Without losing the advantages of the present disclosure, the first and second polyethylene resin layers may contain a resin material other than polyolefin resins, for example, a (meth)acrylic resin, a vinyl resin, a cellulose resin, a polyamide resin, a polyester resin, or an ionomer resin. The first and second polyolefin resin layers particularly preferably do not contain any resin other than the polyethylene resin in terms of recyclability.

Without losing the advantages of the present disclosure, the first and second polyethylene resin layers may contain the additive agent.

The thickness of each of the first and second polyolefin resin layers is preferably 5 µm or more and 100 µm or less, more preferably 10 µm or more and 50 µm or less. The polyolefin resin layer with a thickness of 5 µm or more can improve the strength and heat resistance of the laminate. The polyolefin resin layer with a thickness of 100 µm or less can improve the processability of the laminate.

The first and second polyolefin resin layers may have the same structure or different structures.

### (Packaging Container)

A packaging container according to the present disclosure is produced from the laminate described above. Specific examples of the packaging container include laminated tubes, packaging bags, and cover materials.

### (Laminated Tube)

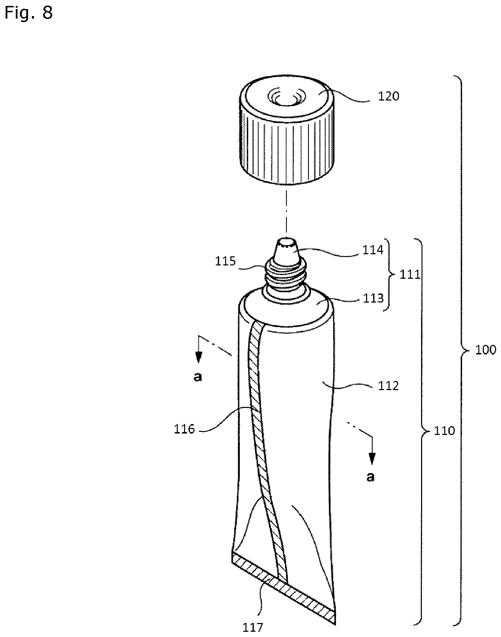

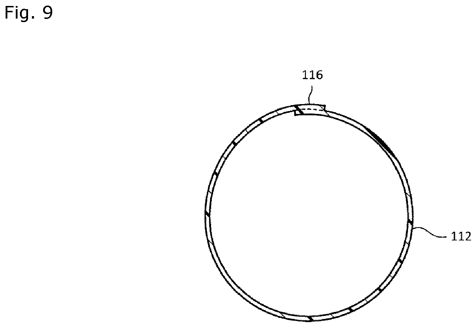

In one embodiment, a packaging container according to the present disclosure is a laminated tube. A laminated tube according to the present disclosure is described below with reference to the accompanying drawings. Fig. 8 is a schematic view of a laminated tube 100, and Fig. 9 is a cross-sectional view taken along the line a-a in Fig. 8. As illustrated in Fig. 8, the laminated tube 100 includes a laminated tube body 110 with a head 111 and a trunk 112, and the trunk 112 is composed of the laminate.

### (Head)

The head 111 includes a shoulder 113 connected to one end of the trunk 112 and an outlet 114 connected to the shoulder 113. In one embodiment, the outlet 114 has a thread 115 for screwing a cap 120.

In one embodiment, the head 111 is composed of a polyethylene resin, which can improve the recyclability of the laminated tube. The polyethylene resin may be a high-density polyethylene resin, a medium-density polyethylene resin, a low-density polyethylene resin, a linear low-density polyethylene resin, or a very-low-density polyethylene resin.

Among these, a high-density polyethylene resin is preferred in terms of shape retention.

The polyethylene resin may also be a biomass-derived polyethylene resin or a mechanically or chemically recycled polyethylene resin.

Without losing the advantages of the present disclosure, the head 111 may contain the additive agent.

The head 111 can be produced by any method, for example, by a known method. For example, the head 111 can be produced by a compression molding method (compression forming method) or an injection molding method (injection forming method) and can be joined to the trunk.

When the laminated tube 100 is produced by the compression molding method (compression forming method), the laminated tube 100 composed of the head 111 and the trunk 112 can be produced by mounting the trunk 112 in a male mold with a protrusion on the top, making the male mold and the female mold facing each other, supplying a material, such as a molten polyethylene resin, into the male and female molds, forming the head 111 by compression molding, and joining the head 111 to one opening of the trunk 112.

When the laminated tube 100 is produced by the injection molding method (injection forming method), the laminated tube 100 composed of the head 111 and the trunk 112 can be produced by mounting the trunk 112 in a male mold with a protrusion on the top, making the male mold and the female mold facing each other, supplying a material, such as a molten polyethylene resin, from a gate, forming the head 111 by injection molding, and joining the head 111 to one opening of the trunk 112.

### (Trunk)

In the laminated tube body 110 according to the present disclosure, the trunk 112 is joined to the shoulder 113 of the head 111.

The trunk 112 can be produced by rounding the laminate into a cylindrical shape, overlapping the first sealant layer and the second sealant layer, and heat-sealing the overlap to form a weld 116.

The trunk 112 also includes a bottom seal 117 formed by heat-sealing the opening of the rounded laminate.

The heat sealing method may be a known method, such as bar sealing, rotating roll sealing, belt sealing, impulse sealing, highfrequency sealing, ultrasonic sealing, or flame sealing.

### (Cap)

The laminated tube 100 may have the cap 120. The cap is detachably attached to the outlet of the head and closes the outlet. The cap is composed of a thermoplastic resin.

The thermoplastic resin may be a polyolefin resin, such as polyethylene or polypropylene, a polyester, a cellulose resin, or a vinyl resin and is particularly preferably a polyethylene resin in terms of recyclability.

Without losing the advantages of the present disclosure, the cap 120 may contain the additive agent.

As illustrated in Fig. 8, the cap may be a screw-type cap with a groove on the inner surface of the cap 120 so as to be screwed into the thread 115 of the outlet 114 or may be a plug-type cap fitted by plugging the outlet 115.

### EXAMPLES

Although a laminate according to the present disclosure is further described in the following examples, a laminate according to the present disclosure is not limited to these examples.

### [Example A1]

### (Preparation of Laminate)

A first sealant layer with a thickness of 125 µm was formed by the inflation method by coextruding
an ethylene-vinyl alcohol copolymer (Eval E171B manufactured by Kuraray Co., Ltd., density: 1.14 g/cm³, melting point: 165°C),
an adhesive resin (maleic anhydride modified polyethylene, Admer NF557 manufactured by Mitsui Chemicals, Inc., density: 0.903 g/cm³),
a linear low-density polyethylene resin A (Dowlex 2098P manufactured by The Dow Chemical Company, density: 0.926 g/cm³),
a high-density polyethylene (Hi-zex 3300F manufactured by Prime Polymer Co., Ltd., density: 0.949 g/cm³), and
a linear low-density polyethylene resin B (Dowlex 2098P manufactured by The Dow Chemical Company, density: 0.926 g/cm³).

In the first sealant layer thus formed, a surface resin layer composed of the ethylene-vinyl alcohol copolymer had a thickness of 2 µm, an adhesive resin layer had a thickness of 3 µm, a polyethylene resin layer composed of the linear low-density polyethylene resin A had a thickness of 30 µm, a polyethylene resin layer composed of the high-density polyethylene had a thickness of 60 µm, and a polyethylene resin layer composed of the linear low-density polyethylene resin B had a thickness of 30 µm.

An aluminum vapor deposition film with a thickness of 30 nm was formed by a PVD method on a surface of the surface resin layer of the first sealant layer to form the first sealant layer with the aluminum vapor deposition film.

As a second sealant layer, a second sealant layer with a thickness of 120 µm was formed by the inflation method by coextruding
the linear low-density polyethylene resin A (Dowlex 2098P manufactured by The Dow Chemical Company, density: 0.926 g/cm³),
a high-density polyethylene resin (Hi-zex 3300F manufactured by Prime Polymer Co., Ltd., density: 0.949 g/cm³), and
the linear low-density polyethylene resin B (Dowlex 2098P manufactured by The Dow Chemical Company, density: 0.926 g/cm³).

In the second sealant layer thus formed, a layer composed of the linear low-density polyethylene resin A had a thickness of 30 µm, a layer composed of the high-density polyethylene resin had a thickness of 60 µm, and a layer composed of the linear low-density polyethylene resin B had a thickness of 30 µm.

A low-density polyethylene (Novatec LC600A manufactured by Japan polyethylene Corporation, density: 0.918 g/cm³) was melt-extruded on the vapor deposition film on the first sealant layer to form a melt-extruded polyethylene layer with a thickness of 20 µm. The vapor deposition film was bonded to the layer composed of the linear low-density polyethylene resin A of the second sealant layer via the melt-extruded polyethylene layer to prepare a laminate. The polyethylene resin content of the laminate was 97% by mass.

### [Example A2]

A first sealant layer and a laminate were prepared in the same manner as in Example A1 except that the ethylene-vinyl alcohol copolymer was replaced with a polyamide (5033 manufactured by Ube Industries, Ltd., density: 1.14 g/cm³, melting point: 196°C). The polyethylene resin content of the laminate was 97% by mass.

### [Example A3]

A blend resin was prepared that contained the linear low-density polyethylene (Dowlex 2098P manufactured by The Dow Chemical Company, density: 0.926 g/cm³) and a compatibilizer (Retain 3000 manufactured by The Dow Chemical Company, maleic anhydride polyethylene, density: 0.87 g/cm³) at a ratio of 8:2 based on mass.

A first sealant layer with a thickness of 125 µm was formed by the inflation method by coextruding
the ethylene-vinyl alcohol copolymer (Eval E171B manufactured by Kuraray Co., Ltd., melting point: 165°C, density: 1.14 g/cm³),
the adhesive resin (maleic anhydride modified polyethylene, Admer NF557 manufactured by Mitsui Chemicals, Inc., density: 0.903 g/cm³),
the blend resin produced as described above,
the high-density polyethylene resin (Hi-zex 3300F manufactured by Prime Polymer Co., Ltd., density: 0.949 g/cm³), and
the linear low-density polyethylene (Dowlex 2098P manufactured by The Dow Chemical Company, density: 0.926 g/cm³).

In the first sealant layer thus formed, a surface resin layer composed of the ethylene-vinyl alcohol copolymer had a thickness of 2 µm, an adhesive resin layer had a thickness of 3 µm, a layer composed of the blend resin had a thickness of 30 µm, a layer composed of the high-density polyethylene resin had a thickness of 60 µm, and a layer composed of the linear low-density polyethylene resin B had a thickness of 30 µm.

A laminate was prepared in the same manner as in Example A1 except that the first sealant layer was replaced with the first sealant layer formed as described above. The polyethylene resin content of the laminate was 97% by mass.

### [Example A4]

A first sealant layer and a laminate were prepared in the same manner as in Example A3 except that the ethylene-vinyl alcohol copolymer was replaced with the polyamide (5033 manufactured by Ube Industries, Ltd., density: 1.14 g/cm³, melting point: 196°C). The polyethylene resin content of the laminate was 97% by mass.

### [Comparative Example A1]

As a first sealant layer, a first sealant layer with a thickness of 120 µm was formed by the inflation method by coextruding
the linear low-density polyethylene A (Dowlex 2098P manufactured by The Dow Chemical Company, density: 0.926 g/cm³),
the high-density polyethylene (Hi-zex 3300F manufactured by Prime Polymer Co., Ltd., density: 0.949 g/cm³), and
the linear low-density polyethylene B (Dowlex 2098P manufactured by The Dow Chemical Company, density: 0.926 g/cm³).

In the first sealant layer thus formed, a layer composed of the linear low-density polyethylene resin A had a thickness of 30 µm, a layer composed of the high-density polyethylene resin had a thickness of 60 µm, and a layer composed of the linear low-density polyethylene resin B had a thickness of 30 µm.

An aluminum vapor deposition film with a thickness of 30 nm was formed by the PVD method on a surface of the layer composed of the linear low-density polyethylene resin A of the first sealant layer to form the first sealant layer with the aluminum vapor deposition film.

A laminate was prepared in the same manner as in Example A1 except that the first sealant layer was replaced with the first sealant layer formed as described above. The polyethylene resin content of the laminate was 98% by mass.

### [Comparative Example A2]

As a first sealant layer, a first sealant layer with a thickness of 120 µm was formed by the inflation method by coextruding
the linear low-density polyethylene A (Dowlex 2098P manufactured by The Dow Chemical Company, density: 0.926 g/cm³),
the high-density polyethylene (Hi-zex 3300F manufactured by Prime Polymer Co., Ltd., density: 0.949 g/cm³), and
the linear low-density polyethylene B (Dowlex 2098P manufactured by The Dow Chemical Company, density: 0.926 g/cm³).

In the first sealant layer thus formed, a layer composed of the linear low-density polyethylene resin A had a thickness of 30 µm, a layer composed of the high-density polyethylene resin had a thickness of 60 µm, and a layer composed of the linear low-density polyethylene resin B had a thickness of 30 µm.

A biaxially stretched poly(ethylene terephthalate) (ester film E5100 manufactured by Toyobo Co., Ltd.) with a thickness of 12 µm was provided as a substrate film.

An aluminum vapor deposition film with a thickness of 30 nm was formed on one surface of the substrate film by the PVD method to form the substrate film with the aluminum vapor deposition film.

A urethane adhesive agent (RU004/H1 manufactured by Rock Paint Co., Ltd.) was applied to the deposited surface of the substrate film and was dried to form an adhesive layer with a thickness of 3 µm. The deposited surface was bonded to the layer composed of the linear low-density polyethylene resin A of the first sealant layer via the adhesive layer.

As a second sealant layer, a second sealant layer with a thickness of 120 µm was formed by the inflation method by coextruding
the linear low-density polyethylene resin A (Dowlex 2098P manufactured by The Dow Chemical Company, density: 0.926 g/cm³),
the high-density polyethylene resin (Hi-zex 3300F manufactured by Prime Polymer Co., Ltd., density: 0.949 g/cm³), and
the linear low-density polyethylene resin B (Dowlex 2098P manufactured by The Dow Chemical Company, density: 0.926 g/cm³).

In the second sealant layer thus formed, a layer composed of the linear low-density polyethylene resin A had a thickness of 30 µm, a layer composed of the high-density polyethylene resin had a thickness of 60 µm, and a layer composed of the linear low-density polyethylene resin B had a thickness of 30 µm.

The low-density polyethylene (Novatec LC600A manufactured by Japan polyethylene Corporation, density: 0.918 g/cm³) was melt-extruded on an undeposited film of the substrate film to form a melt-extruded polyethylene layer with a thickness of 20 µm. The undeposited film was bonded to the layer composed of the linear low-density polyethylene resin A of the second sealant layer via the melt-extruded polyethylene layer to prepare a laminate. The polyethylene resin content of the laminate was 93% by mass.

### (Preparation of Tube Container)

The laminates thus prepared were processed into a slit with a width of 120 mm using a bobbin cutter. Both ends in the width direction were superposed with each other at an overlap width of approximately 1.5 mm and were then thermally fused to prepare a cylindrically bonded raw laminate. The raw laminate was cut to a length of 122 mm in the length direction to prepare a cylindrical trunk, which serves as a trunk of a tube container.

A tube container as illustrated in Fig. 8 was prepared by mounting the cylindrical trunk on a mandrel for forming a tube container, and injecting a high-density polyethylene resin (Novatec HJ360 manufactured by Japan polyethylene Corporation, density: 0.951 g/cm³) by injection molding to form a head composed of a truncated cone shaped shoulder and a cylindrical outlet continuous with the shoulder at one end of the cylindrical trunk.

The outlet of the head of the resulting tube container body had an outer diameter of 13 mm and a height of 1.5 mm and had a thread on the side surface of the outlet. The shoulder had an outer diameter of 38 mm.

The high-density polyethylene was then injected into a mold for forming a cap to form a cap. Thus, a tube container according to the present disclosure was prepared.

### <<Evaluation of Recyclability>>

The recyclability of each laminate prepared in the examples and comparative examples was evaluated on the basis of the following evaluation criteria. Table 1 summarizes the evaluation results.

### (Evaluation Criteria)

O: The polyethylene resin content of the laminate was 95% or more by mass.
X: The polyethylene resin content of the laminate was less than 95% by mass.

### <<Shoulder Adhesive Strength>>

A test specimen was cut out in a band shape with a width of 15 mm toward the bottom from the joint between the trunk and the shoulder.

The test specimen was pulled with a tensile tester (RTC-1310A manufactured by Orientec Co., Ltd.) at a test speed of 300 mm/min to measure peel strength when the trunk was separated from the shoulder. Table 1 summarizes the measurement results.

### <<Side Seam Strength>>

A test specimen was cut out in a band shape with a width of 15 mm in the direction perpendicular to the side seam (overlap) of the trunk and was pulled with the tensile tester at a test speed of 300 mm/min to measure breaking strength. Table 1 summarizes the measurement results.

### <<Evaluation of Leakage>>

A cap was screwed on the outlet of the tube container body. The tube container body was then filled with 120 g of a commercial toothpaste as the contents through the opening of the cylindrical trunk. The opening of the cylindrical trunk was then heat-sealed. The cap was closed at a torque of 4.7 kg·cm. While left at room temperature for two weeks, the contents were visually checked for leakage every day. The leakage was evaluated on the basis of the following criteria. Table 1 summarizes the evaluation results.

### (Evaluation Criteria)

O: No leakage of the contents was observed even after the two weeks.
X: Leakage of the contents was observed within the two weeks.

### <<Evaluation of Gas Barrier Properties>>

The oxygen permeability (cc/m²/day/atm) and water vapor permeability (g/m²/day) of each laminate prepared in the examples and comparative examples were measured by the following method. Table 1 summarizes the results.

### [Oxygen Permeability]

While oxygen was supplied to the surface of the first sealant layer of the test specimen, the oxygen permeability was measured with an oxygen permeability measuring apparatus (OX-TRAN 2/20 manufactured by MOCON) in accordance with JIS K 7126 in an environment of 23°C and a relative humidity of 90% RH.

### [Water Vapor Permeability]

While water vapor was supplied to the surface of the first sealant layer of the test specimen, the water vapor permeability was measured with a water vapor permeability measuring apparatus (PERMATRAN-w 3/33 manufactured by MOCON) in accordance with JIS K 7129 in an environment of 40°C and a relative humidity of 90% RH.

**[Table 1]**

| | Evaluation of recyclability | Shoulder adhesive strength | Side seam strength | Evaluation of leakage | Gas barrier properties | |
|---|---|---|---|---|---|---|
| | | [N/15mm] | [N/15mm] | | Oxygen permeability | Water vapor permeability |
| Example A1 | ○ | 83 | 84 | ○ | 1.2 | 1.0 |
| Example A2 | ○ | 82 | 85 | ○ | 1.1 | 1.3 |
| Example A3 | ○ | 81 | 83 | ○ | 1.2 | 1.2 |
| Example A4 | ○ | 84 | 82 | ○ | 1.0 | 1.3 |
| Comparative example A1 | ○ | 82 | 84 | ○ | 130 | 12 |
| Comparative example A2 | × | 87 | 86 | ○ | 1.8 | 1.5 |

### [Example B1]

### (Preparation of Laminate)

A substrate with a thickness of 40 µm was formed by the T-die method by coextruding
the ethylene-vinyl alcohol copolymer (Eval E171B manufactured by Kuraray Co., Ltd., melting point: 165°C, density: 1.14 g/cm³),
an adhesive resin (maleic anhydride modified polyethylene, Admer NF557 manufactured by Mitsui Chemicals, Inc., density: 0.920 g/cm³), and
a linear density polyethylene resin A (SP 2520 manufactured by Prime Polymer Co., Ltd., density: 0.925 g/cm³, melting point: 122°C).

In the substrate thus formed, a surface resin layer composed of the ethylene-vinyl alcohol copolymer had a thickness of 2 µm, an adhesive resin layer had a thickness of 3 µm, and a polyethylene resin layer composed of the linear low-density polyethylene resin A had a thickness of 35 µm.

An aluminum vapor deposition film with a thickness of 30 nm was formed on the surface of the surface resin layer of the substrate by the PVD method at a pressure of 3.0 × 10⁻² Pa. Thus, an aluminum vapor-deposited substrate was prepared.

As a first sealant layer, a first sealant layer with a thickness of 120 µm was formed by the inflation method by coextruding
the linear low-density polyethylene resin B (Dowlex 2098P manufactured by The Dow Chemical Company, density: 0.926 g/cm³),
the high-density polyethylene (Hi-zex 3300F manufactured by Prime Polymer Co., Ltd., density: 0.949 g/cm³), and
a linear low-density polyethylene resin C (Dowlex 2098P manufactured by The Dow Chemical Company, density: 0.926 g/cm³).

In the substrate thus formed, a layer composed of the linear low-density polyethylene resin B had a thickness of 30 µm, a layer composed of the high-density polyethylene resin had a thickness of 60 µm, and a layer composed of the linear low-density polyethylene resin C had a thickness of 30 µm.

The urethane adhesive agent (RU004/H1 manufactured by Rock Paint Co., Ltd.) was applied to the deposited surface of the substrate and was dried to form an adhesive layer with a thickness of 3 µm. The deposited surface was bonded to the layer composed of the linear low-density polyethylene resin B of the first sealant layer via the adhesive layer.

As a second sealant layer, a second sealant layer with a thickness of 120 µm was formed by the inflation method by coextruding
the linear low-density polyethylene resin B (Dowlex 2098P manufactured by The Dow Chemical Company, density: 0.926 g/cm³),
the high-density polyethylene resin (Hi-zex 3300F manufactured by Prime Polymer Co., Ltd., density: 0.949 g/cm³), and
the linear low-density polyethylene resin C (Dowlex 2098P manufactured by The Dow Chemical Company, density: 0.926 g/cm³).

In the second sealant layer thus formed, a linear low-density polyethylene 1 had a thickness of 30 µm, the high-density polyethylene had a thickness of 60 µm, and a linear low-density polyethylene 2 had a thickness of 30 µm.

The low-density polyethylene (Novatec LC600A manufactured by Japan polyethylene Corporation, density: 0.918 g/cm³) was melt-extruded on an undeposited film of the substrate to form a melt-extruded polyethylene layer with a thickness of 20 µm. The undeposited film was bonded to the layer composed of the linear low-density polyethylene resin B of the second sealant layer via the melt-extruded polyethylene layer to prepare a laminate according to the present disclosure. The polyethylene resin content of the laminate was 98%.

### [Example B2]

A blend resin was prepared that contained the linear low-density polyethylene (SP 2520 manufactured by Prime Polymer Co., Ltd., density: 0.925 g/cm³, melting point: 122°C) and the compatibilizer (Retain 3000 manufactured by The Dow Chemical Company, maleic anhydride polyethylene, density: 0.87 g/cm³) at a ratio of 8:2 based on mass.

A substrate with a thickness of 40 µm was formed by the T-die method by coextruding
the ethylene-vinyl alcohol copolymer (Eval E171B manufactured by Kuraray Co., Ltd., melting point: 165°C, density: 1.14 g/cm³),
the adhesive resin (maleic anhydride modified polyethylene, Admer NF557 manufactured by Mitsui Chemicals, Inc., density: 0.920 g/cm³),
the blend resin produced as described above, and
the linear density polyethylene (SP 2520 manufactured by Prime Polymer Co., Ltd., density: 0.925 g/cm³, melting point: 122°C).

In the substrate thus formed, a surface resin layer composed of the ethylene-vinyl alcohol copolymer had a thickness of 2 µm, an adhesive resin layer had a thickness of 3 µm, a layer composed of the blend resin had a thickness of 20 µm, and a polyethylene resin layer composed of the linear low-density polyethylene had a thickness of 15 µm.

A laminate according to the present disclosure was prepared in the same manner as in Example B1 except that the substrate was replaced with the substrate formed as described above. The polyethylene resin content of the laminate was 98%.

### [Example B3]

A substrate and a laminate were prepared in the same manner as in Example B1 except that the ethylene-vinyl alcohol copolymer was replaced with the polyamide (5033 manufactured by Ube Industries, Ltd., melting point: 196°C, density: 1.14 g/cm³). The polyethylene resin content of the laminate was 98%.

### [Example B4]

A blend resin was prepared that contained the linear low-density polyethylene (SP 2520 manufactured by Prime Polymer Co., Ltd., density: 0.925 g/cm³, melting point: 122°C) and the compatibilizer (Retain 3000 manufactured by The Dow Chemical Company, maleic anhydride polyethylene, density: 0.87 g/cm³) at a ratio of 8:2 based on mass.

A substrate with a thickness of 40 µm was formed by the T-die method by coextruding
the polyamide (5033 manufactured by Ube Industries, Ltd., melting point: 196°C, density: 1.14 g/cm³),
the adhesive resin (maleic anhydride modified polyethylene, Admer NF557 manufactured by Mitsui Chemicals, Inc., density: 0.920 g/cm³),
the blend resin produced as described above, and
the linear density polyethylene (SP 2520 manufactured by Prime Polymer Co., Ltd., density: 0.925 g/cm³, melting point: 122°C).

In the substrate thus formed, a surface resin layer composed of the polyamide had a thickness of 2 µm, an adhesive resin layer had a thickness of 3 µm, a layer composed of the blend resin had a thickness of 20 µm, and a polyethylene resin layer composed of the linear low-density polyethylene had a thickness of 15 µm.

A laminate according to the present disclosure was prepared in the same manner as in Example B1 except that the substrate was replaced with the substrate formed as described above. The polyethylene resin content of the laminate was 98%.

### [Comparative Example B1]

A laminate was prepared in the same manner as in Example B1 except that the substrate was replaced with the biaxially stretched poly(ethylene terephthalate) (ester film E5100 manufactured by Toyobo Co., Ltd.) with a thickness of 12 µm. The polyethylene resin content of the laminate was 93%.

### (Preparation of Tube Container)

The laminates thus prepared were prepared as described above.

The laminates prepared in the examples and comparative examples were evaluated in terms of recyclability, shoulder adhesive strength, side seam strength, leakage, and gas barrier properties as described above. Table 2 summarizes the evaluation results.

### <<Laminate Strength Test>>

The laminate strength (N/15 mm) between the vapor deposition film and the surface resin layer (examples) and between the vapor deposition film and the biaxially stretched poly(ethylene terephthalate) film (comparative examples) in samples prepared by cutting the laminates prepared in the examples and comparative examples into strips with a width of 15 mm was measured with a tensile tester (Tensilon universal testing machine manufactured by Orientec Co., Ltd.) in accordance with JIS K 6854-2 by 90-degree peeling (a T peel method) at a peel rate of 50 mm/min. Table 2 summarizes the measurement results.

**[Table 2]**

| | Evaluation of recyclability | Shoulder adhesive strength | Side seam strength | Evaluation of leakage | Gas barrier properties | | Laminate strength |
|---|---|---|---|---|---|---|---|
| | | [N/15mm] | [N/15mm] | | Oxygen permeability | Water vapor permeability | [N/15mm] |
| Example B1 | ○ | 87 | 85 | ○ | 0.6 | 0.7 | 6.2 |
| Example B2 | ○ | 85 | 84 | ○ | 0.7 | 0.7 | 6.3 |
| Example B3 | ○ | 88 | 84 | ○ | 0.9 | 1.0 | 5.9 |
| Example B4 | ○ | 85 | 85 | ○ | 0.9 | 1.1 | 5.7 |
| Comparative example B1 | × | 87 | 86 | ○ | 1.8 | 1.5 | 4.3 |

### [Example C1]

### (Preparation of Laminate)

A film composed of a surface resin layer (10 µm), an adhesive resin layer (15 µm), and a polyethylene resin layer (100 µm) was formed by the inflation method by coextruding
the ethylene-vinyl alcohol copolymer (Eval E171B manufactured by Kuraray Co., Ltd., melting point: 165°C, density: 1.14 g/cm³),
the adhesive resin (maleic anhydride modified polyethylene, Admer NF557 manufactured by Mitsui Chemicals, Inc., density: 0.920 g/cm³), and
the linear density polyethylene resin A (SP 2520 manufactured by Prime Polymer Co., Ltd., density: 0.925 g/cm³, melting point: 122°C).

The film was stretched in the machine direction (MD) at a stretch ratio of 5 to form a stretched substrate with a thickness of 25 µm. The thickness after the stretching was 2 µm in the surface resin layer, 3 µm in the adhesive resin layer, and 20 µm in the polyethylene resin layer.

An aluminum vapor deposition film with a thickness of 30 nm was formed on the surface of the surface resin layer of the stretched substrate by the PVD method at a pressure of 3.0 × 10⁻² Pa. Thus, an aluminum vapor-deposited substrate was prepared.

As a first sealant layer, a first sealant layer with a thickness of 120 µm was formed by the inflation method by coextruding
the linear low-density polyethylene resin A (Dowlex 2098P manufactured by The Dow Chemical Company, density: 0.926 g/cm³),
the high-density polyethylene resin (Hi-zex 3300F manufactured by Prime Polymer Co., Ltd., density: 0.949 g/cm³), and
the linear low-density polyethylene resin B (Dowlex 2098P manufactured by The Dow Chemical Company, density: 0.926 g/cm³).

In the first sealant layer thus formed, a layer composed of the linear low-density polyethylene resin A had a thickness of 30 µm, a layer composed of the high-density polyethylene resin had a thickness of 60 µm, and a layer composed of the linear low-density polyethylene resin B had a thickness of 30 µm.

The urethane adhesive agent (RU004/H1 manufactured by Rock Paint Co., Ltd.) was applied to the deposited surface of the substrate and was dried to form an adhesive layer with a thickness of 3 µm. The deposited surface was bonded to the layer composed of the linear low-density polyethylene A of the first sealant layer via the adhesive layer.

As a second sealant layer, a heat-seal layer with a thickness of 120 µm was formed by the inflation method by coextruding
the linear low-density polyethylene resin A (Dowlex 2098P manufactured by The Dow Chemical Company, density: 0.926 g/cm³),
the high-density polyethylene (Hi-zex 3300F manufactured by Prime Polymer Co., Ltd., density: 0.949 g/cm³), and
the linear low-density polyethylene resin B (Dowlex 2098P manufactured by The Dow Chemical Company, density: 0.926 g/cm³).

In the surface film thus formed, a linear low-density polyethylene 1 had a thickness of 30 µm, the high-density polyethylene had a thickness of 60 µm, and a linear low-density polyethylene 2 had a thickness of 30 µm.

The low-density polyethylene resin (Novatec LC600A manufactured by Japan polyethylene Corporation, density: 0.918 g/cm³) was melt-extruded on an undeposited film of the substrate to form a melt-extruded resin layer with a thickness of 20 µm. The undeposited film was bonded to the layer composed of the linear low-density polyethylene resin A of the second heat-seal layer via the melt-extruded resin layer to prepare a laminate according to the present disclosure. The polyethylene content of the laminate was 98%.

### [Example C2]

A blend resin was prepared that contained a linear low-density polyethylene resin (Elite 5538 manufactured by The Dow Chemical Company, density: 0.941 g/cm³, melting point: 129°C) and the compatibilizer (Retain 3000 manufactured by The Dow Chemical Company, maleic anhydride polyethylene, density: 0.87 g/cm³) at a ratio of 8:2 based on mass.

A film of a surface resin layer 10 µm, an adhesive resin layer 15 µm, a layer composed of the blend resin 50 µm, and a layer composed of the medium-density polyethylene resin 50 µm was formed by the inflation method by coextruding
the ethylene-vinyl alcohol copolymer (Eval E171B manufactured by Kuraray Co., Ltd., melting point: 165°C, density: 1.14 g/cm³),
the adhesive resin (maleic anhydride modified polyethylene, Admer NF557 manufactured by Mitsui Chemicals, Inc., density: 0.920 g/cm³),
the blend resin produced as described above, and
a medium-density polyethylene resin (Elite 5538 manufactured by The Dow Chemical Company, density: 0.941 g/cm³, melting point: 129°C).

The substrate film was stretched in the machine direction (MD) at a stretch ratio of 5 to form a stretched substrate with a thickness of 25 µm. The thickness after the stretching was 2 µm in a gas barrier resin layer, 3 µm in the adhesive resin layer, 10 µm in the layer composed of the blend resin, and 10 µm in the layer composed of the medium-density polyethylene resin.

A laminate according to the present disclosure was prepared in the same manner as in Example C1 except that the substrate was replaced with the substrate formed as described above. The polyethylene resin content of the laminate was 98%.

### [Example C3]

A substrate and a laminate were prepared in the same manner as in Example C1 except that the ethylene-vinyl alcohol copolymer was replaced with a polyamide 6-66 copolymer (NY, manufactured by Ube Industries, Ltd., trade name: 5033, density: 1.14 g/cm³, melting point: 196°C). The polyethylene resin content of the laminate was 98%.

### [Example C4]

A blend resin was prepared that contained the linear low-density polyethylene (Elite 5538 manufactured by The Dow Chemical Company, density: 0.941 g/cm³, melting point: 129°C) and the compatibilizer (Retain 3000 manufactured by The Dow Chemical Company, maleic anhydride polyethylene, density: 0.87 g/cm³) at a ratio of 8:2 based on mass.

A film composed of a surface resin layer 10 µm, an adhesive resin layer 15 µm, a layer composed of the blend resin 50 µm, and a layer composed of the medium-density polyethylene resin 50 µm was formed by an inflation molding method by coextruding
the polyamide 6-66 copolymer (manufactured by Ube Industries, Ltd., trade name: 5033, density: 1.14 g/cm³, melting point: 196°C),
the adhesive resin (maleic anhydride modified polyethylene, Admer NF557 manufactured by Mitsui Chemicals, Inc., density: 0.920 g/cm³),
the blend resin produced as described above, and
the medium-density polyethylene resin (Elite 5538 manufactured by The Dow Chemical Company, density: 0.941 g/cm³, melting point: 129°C).

The film was stretched in the machine direction (MD) at a stretch ratio of 5 to form a stretched substrate with a thickness of 25 µm. The thickness after the stretching was 2 µm in the surface resin layer, 3 µm in the adhesive resin layer, 10 µm in the layer composed of the blend resin, and 10 µm in the layer composed of the medium-density polyethylene resin.

A laminate according to the present disclosure was prepared in the same manner as in Example C1 except that the substrate was replaced with the substrate formed as described above. The polyethylene resin content of the laminate was 98%.

### [Comparative Example C1]

A laminate was prepared in the same manner as in Example C1 except that the substrate was replaced with the biaxially stretched poly(ethylene terephthalate) (manufactured by Toyobo Co., Ltd., ester film E5100) with a thickness of 12 µm. The polyethylene content of the laminate was 93%.

### (Preparation and Evaluation of Tube Container)

The laminates thus prepared were prepared as described above and were evaluated in terms of recyclability, shoulder adhesive strength, side seam strength, leakage, gas barrier properties, and laminate strength as described above. Table 3 summarizes the evaluation results.

**[Table 3]**

| | Evaluation of recyclability | Shoulder adhesive strength | Side seam strength | Evaluation of leakage | Gas barrier properties | | Laminate strength |
|---|---|---|---|---|---|---|---|
| | | [N/15mm] | [N/15mm] | | Oxygen permeability | Water vapor permeability | [N/15mm] |
| Example C1 | ○ | 85 | 85 | ○ | 0.8 | 0.7 | 5.8 |
| Example C2 | ○ | 86 | 85 | ○ | 0.9 | 0.8 | 5.7 |
| Example C3 | ○ | 87 | 84 | ○ | 0.8 | 1.1 | 5.5 |
| Example C4 | ○ | 86 | 85 | ○ | 0.9 | 1.0 | 5.6 |
| Comparative example C1 | × | 87 | 86 | ○ | 1.8 | 1.5 | 4.3 |

### [Example D1-1]

The materials used in the following examples are as follows:
- Polyethylene resin A: ELITE 5538G manufactured by The Dow Chemical Company, MDPE, density: 0.941 g/cm³, melting point: 129°C, MFR: 1.3 g/10 min
- Polyethylene resin B: ELITE 5960G manufactured by The Dow Chemical Company, HDPE, density: 0.962 g/cm³, melting point: 134°C, MFR: 0.85 g/10 min
- Polyethylene resin C: SP 2520 manufactured by Prime Polymer Co., Ltd., m-C6-LLDPE, density: 0.925 g/cm³, melting point: 122°C, MFR: 1.9 g/10 min
- Polyethylene resin D: Affinity PL1880G manufactured by The Dow Chemical Company, m-C8-LLDPE, density: 0.902 g/cm³, melting point: 99°C, MFR: 1.0 g/10 min
- Olefin elastomer resin A: INFUSE 9100 manufactured by The Dow Chemical Company, olefin block copolymer (with a polyethylene as a hard block and an α-olefin elastomer resin as a soft block), density: 0.877 g/cm³, melting point: 120°C, MFR: 1.0 g/10 min
- Olefin elastomer resin B: Tafmer A-4085S manufactured by Mitsui Chemicals, Inc., α-olefin copolymer, density: 0.885 g/cm³, melting point: 66°C, MFR: 3.6 g/10 min

A mixture of the polyethylene resin A and the olefin elastomer resin A (blend ratio: 8:2 (based on mass)) and the polyethylene resin A were subjected to two-layer coextrusion by the inflation method to form a film. The film was then stretched five times in the machine direction (MD) to prepare a substrate including a first polyethylene resin layer composed of the mixture of the polyethylene resin A and the olefin elastomer resin and a second polyethylene resin layer composed of the polyethylene resin A.

In the substrate, the first polyethylene resin layer had a thickness of 2 µm, and the second polyethylene resin layer had a thickness of 23 µm.

An aluminum vapor deposition film with a thickness of 30 nm was formed by the PVD method on the first polyethylene resin layer of the substrate thus prepared to prepare a vapor-deposited substrate. The optical density (OD value) of the vapor deposition film thus formed was measured to be 3.0.

### [Examples D1-2 to D1-5 and Comparative Example D1-1]

Substrates and vapor-deposited substrates were prepared in the same manner as in Example D1-1 except that the structure of the first polyethylene resin layer was changed as shown in Table 4.

### <<Evaluation of Laminate Strength> >

The polyethylene resin C was subjected to single layer extrusion by the inflation method to form an unstretched polyethylene resin film with a thickness of 100 µm.

As a first sealant layer, this unstretched polyethylene resin film was put on the vapor deposition film of each vapor-deposited substrate prepared in Examples D1-1 to D1-5 and Comparative Example D1-1 via a two-component curing urethane adhesive agent (RU-004/H-1 manufactured by Rock Paint Co., Ltd.) to prepare a laminate.

The laminate thus prepared was cut into strips with a width of 15 mm used as test specimens. The peel strength between the vapor deposition film and the first polyethylene resin layer in these test specimens was measured with a tensile tester (Tensilon universal testing machine manufactured by Orientec Co., Ltd.) in accordance with JIS K 6854-2. Table 4 shows the measurement results. The peel rate was 50 mm/min, and the peel angle was 180 degrees.

### [Example D2-1]

A mixture of the polyethylene resin A and the olefin elastomer resin A (blend ratio: 8:2 (based on mass)), the polyethylene resin A, and a mixture of the polyethylene resin A and the olefin elastomer resin A (blend ratio: 8:2 (based on mass) were subjected to three-layer coextrusion by the inflation method to form a film. The film was then stretched five times in the machine direction (MD) to prepare a substrate including a first polyethylene resin layer composed of the mixture of the polyethylene resin A and the olefin elastomer resin, a second polyethylene resin layer composed of the polyethylene resin A, and a third polyethylene resin layer composed of the mixture of the polyethylene resin A and the olefin elastomer resin. In the substrate, the first polyethylene resin layer had a thickness of 2 µm, the second polyethylene resin layer had a thickness of 21 µm, and the third polyethylene resin layer had a thickness of 2 µm.

An aluminum vapor deposition film with a thickness of 30 nm was formed by the PVD method on the first polyethylene resin layer of the substrate thus prepared to prepare a vapor-deposited substrate. The optical density (OD value) of the vapor deposition film thus formed was measured to be 3.0.

### [Examples D2-2 to D2-5 and Comparative Example D2-1]

Substrates and vapor-deposited substrates were prepared in the same manner as in Example D2-1 except that the structures of the first polyethylene resin layer and the third polyethylene resin layer were changed as shown in Table 5.

### <<Evaluation of Laminate Strength>>

The polyethylene resin C was subjected to single layer extrusion by the inflation method to form an unstretched polyethylene resin film with a thickness of 100 µm.

As a first sealant layer, this unstretched polyethylene resin film was put on the vapor deposition film of each vapor-deposited substrate prepared in Examples D2-1 to D2-5 and Comparative Example D2-1 via a two-component curing urethane adhesive agent (RU-004/H-1 manufactured by Rock Paint Co., Ltd.) to prepare a laminate.

The laminate thus prepared was cut into strips with a width of 15 mm used as test specimens. The peel strength between the vapor deposition film and the first polyethylene resin layer in these test specimens was measured with a tensile tester (Tensilon universal testing machine manufactured by Orientec Co., Ltd.) in accordance with JIS K 6854-2. Table 5 shows the measurement results. The peel rate was 50 mm/min, and the peel angle was 180 degrees.

### [Example D3-1]

A mixture of the polyethylene resin A and the olefin elastomer resin A (blend ratio: 8:2 (based on mass)) was subjected to single layer coextrusion by the inflation method to form a film. The film was then stretched five times in the machine direction (MD) to prepare a substrate including a first polyethylene resin layer composed of the mixture of the polyethylene resin A and the olefin elastomer resin A. In the substrate, the first polyethylene resin layer had a thickness of 25 µm.

An aluminum vapor deposition film with a thickness of 30 nm was formed by the PVD method on the first polyethylene resin layer of the substrate thus prepared to prepare a vapor-deposited substrate.

### [Examples D3-2 to D3-5 and Comparative Example D3-1]

Substrates and vapor-deposited substrates were prepared in the same manner as in Example D3-1 except that the structure of the first polyethylene resin layer was changed as shown in Table 6.

### <<Evaluation of Laminate Strength>>

The polyethylene resin C was subjected to single layer extrusion by the inflation method to form an unstretched polyethylene resin film with a thickness of 100 µm. As a first sealant layer, this unstretched polyethylene resin film was put on the vapor deposition film of each vapor-deposited substrate prepared in Examples D3-1 to D3-5 and Comparative Example D3-1 via a two-component curing urethane adhesive agent (RU-004/H-1 manufactured by Rock Paint Co., Ltd.) to prepare a laminate.

The laminate thus prepared was cut into strips with a width of 15 mm used as test specimens. The peel strength between the vapor deposition film and the first polyethylene resin layer in these test specimens was measured with a tensile tester (Tensilon universal testing machine manufactured by Orientec Co., Ltd.) in accordance with JIS K 6854-2. Table 6 shows the measurement results. The peel rate was 50 mm/min, and the peel angle was 180 degrees.

### [Example D4-1]

A film with a five-layer structure including a first polyethylene resin layer composed of a mixture of the polyethylene resin A and the olefin elastomer resin A, a second polyethylene resin layer composed of the polyethylene resin A, a third polyethylene resin layer composed of the polyethylene resin D, a fourth polyethylene resin layer composed of the polyethylene resin A, and a fifth polyethylene resin layer composed of a mixture of the polyethylene resin A and the olefin elastomer resin A was prepared by coextruding a mixture of the polyethylene resin A and the olefin elastomer resin A (blend ratio: 8:2 (based on mass)), the polyethylene resin A, and the polyethylene resin D by the inflation method to form a three-layer tubular film including a layer composed of the mixture of the polyethylene resin A and the olefin elastomer resin A (outer layer), a layer composed of the polyethylene resin A (intermediate layer), and a layer composed of the polyethylene resin C (inner layer), and
then pressure-bonding the inner layers, that is, the layers composed of the polyethylene resin D with a rubber roller.

This film was stretched five times in the machine direction (MD) to prepare a substrate. In the substrate, the first polyethylene resin layer had a thickness of 2 µm, the second polyethylene resin layer had a thickness of 9.3 µm, the third polyethylene resin had a thickness of 2.4 µm, the fourth polyethylene resin layer had a thickness of 9.3 µm, and the fifth polyethylene resin had a thickness of 2 µm.

An aluminum vapor deposition film with a thickness of 30 nm was formed by the PVD method on the first polyethylene resin layer of the substrate thus prepared to prepare a vapor-deposited substrate. The optical density (OD value) of the vapor deposition film thus formed was measured to be 3.0.

### [Examples D4-2 to D4-5 and Comparative Example D4-1]

Substrates and vapor-deposited substrates were prepared in the same manner as in Example D4-1 except that the structures of the first polyethylene resin layer and the fifth polyethylene resin layer were changed as shown in Table 7.

### <<Evaluation of Laminate Strength>>

The polyethylene resin C was subjected to single layer extrusion by the inflation method to form an unstretched polyethylene resin film with a thickness of 100 µm. As a first sealant layer, this unstretched polyethylene resin film was put on the vapor deposition film of each vapor-deposited substrate prepared in Examples D4-1 to D4-4 and Comparative Examples D4-1 and D4-2 via a two-component curing urethane adhesive agent (RU-004/H-1 manufactured by Rock Paint Co., Ltd.) to prepare a laminate.

The laminate thus prepared was cut into strips with a width of 15 mm used as test specimens. The peel strength between the vapor deposition film and the first polyethylene resin layer in these test specimens was measured with a tensile tester (Tensilon universal testing machine manufactured by Orientec Co., Ltd.) in accordance with JIS K 6854-2. Table 7 shows the measurement results. The peel rate was 50 mm/min, and the peel angle was 180 degrees.

**[Table 4]**

| | First polyethylene resin layer | | | | | Second polyethylene resin layer | | Evaluation of laminate strength |
|---|---|---|---|---|---|---|---|---|
| | Type of constituent polyethylene resin | Density | Polyethylene resin content | Type of olefin elastomer resin | Olefin elastomer resin content | Type of constituent polyethylene resin | Density | |
| | | (g/cm³) | (mass%) | | (mass%) | | (g/cm³) | (N/15mm) |
| Example D 1-1 | Polyethylene resin A | 0.941 | 80 | A | 20 | Polyethylene resin A | 0.941 | 5.5 |
| Example D 1-2 | Polyethylene resin B | 0.962 | 90 | A | 10 | Polyethylene resin A | 0.941 | 4.3 |
| Example D 1-3 | Polyethylene resin B | 0.962 | 80 | A | 20 | Polyethylene resin A | 0.941 | 7.3 |
| Example D 1-4 | Polyethylene resin B | 0.962 | 70 | A | 30 | Polyethylene resin A | 0.941 | 8.0 |
| Example D 1-5 | Polyethylene resin B | 0.962 | 80 | B | 20 | Polyethylene resin A | 0.941 | 3.3 |
| Comparative example D 1-1 | Polyethylene resin B | 0.962 | 100 | - | 0 | Polyethylene resin A | 0.941 | 2.1 |

**[Table 5]**

| | First polyethylene resin layer | | | | | Second polyethylene resin layer | | Third polyethylene resin layer | | | | | Evaluation of laminate strength |
|---|---|---|---|---|---|---|---|---|---|---|---|---|---|
| | Type of constituent polyethylene resin | Density | Polyethylene resin content | Type of olefin elastomer resin | Olefin elastomer resin content | Type of constituent polyethylene resin | Density | Type of constituent polyethylene resin | Density | Polyethylene resin content | Type of olefin elastomer resin | Olefin elastomer resin content | |
| | | (g/cm³) | (mass%) | | (mass%) | | (g/cm³) | | (g/cm³) | (mass%) | | (mass%) | (N/15mm) |
| Example D2-1 | Polyethylene resin A | 0.941 | 80 | A | 20 | Polyethylene resin A | 0.941 | Polyethylene resin A | 0.908 | 80 | A | 20 | 5.5 |
| Example D 2-2 | Polyethylene resin B | 0.962 | 90 | A | 10 | Polyethylene resin A | 0.941 | Polyethylene resin C | 0.941 | 90 | A | 10 | 4.3 |
| Example D 2-3 | Polyethylene resin B | 0.962 | 80 | A | 20 | Polyethylene resin A | 0.941 | Polyethylene resin D | 0.925 | 80 | A | 20 | 7.3 |
| Example D2-4 | Polyethylene resin B | 0.962 | 70 | A | 30 | Polyethylene resin A | 0.941 | Polyethylene resin B | 0.920 | 70 | A | 30 | 8.0 |
| Example D2-5 | Polyethylene resin B | 0.962 | 80 | B | 20 | Polyethylene resin A | 0.941 | Polyethylene resin a | 0.949 | 80 | B | 20 | 3.3 |
| Comparative example D 2-1 | Polyethylene resin B | 0.962 | 100 | - | 0 | Polyethylene resin A | 0.941 | Polyethylene resin b | 0.962 | 100 | - | 0 | 2.1 |

**[Table 6]**

| | First polyethylene resin layer | | | | | Evaluation of laminate strength |
|---|---|---|---|---|---|---|
| | Type of constituent polyethylene resin | Density | Polyethylene resin content | Type of olefin elastomer resin | Olefin elastomer resin content | |
| | | (g/cm³) | (mass%) | | (mass%) | (N/15mm) |
| Example D3-1 | Polyethylene resin A | 0.941 | 80 | A | 20 | 5.5 |
| Example D3-2 | Polyethylene resin B | 0.962 | 90 | A | 10 | 4.3 |
| Example D3-3 | Polyethylene resin B | 0.962 | 80 | A | 20 | 7.3 |
| Example D3-4 | Polyethylene resin B | 0.962 | 70 | A | 30 | 8.0 |
| Example D3-5 | Polyethylene resin B | 0.962 | 80 | B | 20 | 3.3 |
| Comparative example D3-1 | Polyethylene resin B | 0.962 | 100 | - | 0 | 2.1 |

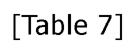

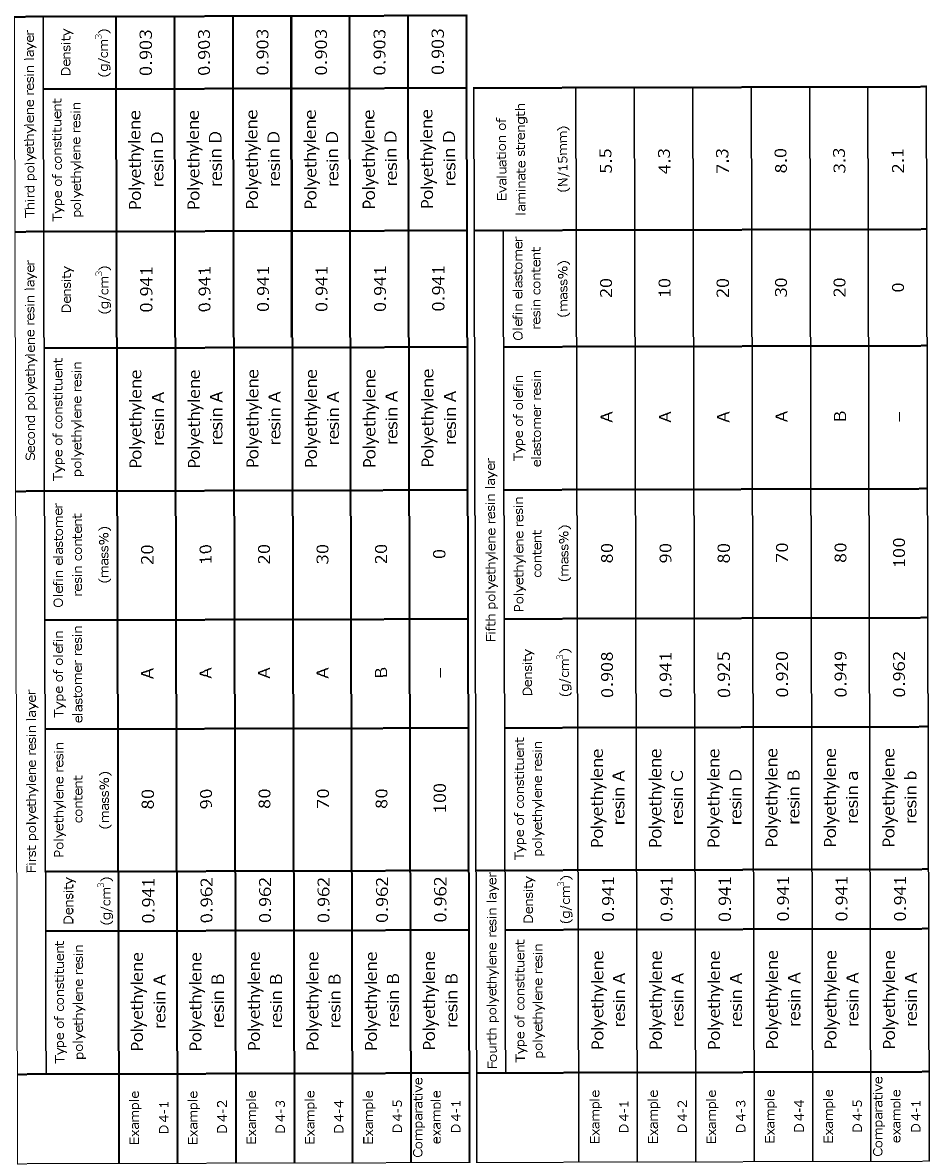

### [Example E1]

The materials used in the following examples are as follows:
- Polyethylene resin A: ELITE 5960G manufactured by The Dow Chemical Company, HDPE, density: 0.962 g/cm³, melting point: 134°C, MFR: 0.85 g/10 min
- Polyethylene resin B: ELITE 5538G manufactured by The Dow Chemical Company, MDPE, density: 0.941 g/cm³, melting point: 129°C, MFR: 1.3 g/10 min
- Polyethylene resin C: Affinity PL1880G manufactured by The Dow Chemical Company, m-C8-LLDPE, density: 0.902 g/cm³, melting point: 99°C, MFR: 1.0 g/10 min
- Olefin elastomer resin A: INFUSE 9100 manufactured by The Dow Chemical Company, olefin block copolymer (with a polyethylene as a hard block and an α-olefin elastomer resin as a soft block), density: 0.877 g/cm³, melting point: 120°C, MFR: 1.0 g/10 min

### [Example E1-1]

The polyethylene resin B was subjected to two-layer coextrusion by the inflation molding method to form a film composed of a first polyethylene resin layer (10 µm) and a second polyethylene resin layer (115 µm). The film was stretched five times in the machine direction (MD) to form a stretched substrate with a thickness of 25 µm. The thickness after the stretching was 2 µm in the first polyethylene resin layer and 23 µm in the second polyethylene resin layer.

A vapor-deposited substrate was prepared by forming an Al vapor deposition film with a thickness of 30 nm by the PVD method on the first polyethylene resin layer of the stretched substrate thus prepared. The optical density (OD value) of the vapor deposition film thus formed was measured to be 3.0.

As a first sealant layer, a first sealant layer with a thickness of 100 µm was formed by the inflation method by coextruding
a linear low-density polyethylene resin D (Dowlex 2098P manufactured by The Dow Chemical Company, density: 0.926 g/cm³),
the high-density polyethylene resin (Hi-zex 3300F manufactured by Prime Polymer Co., Ltd., density: 0.950 g/cm³), and
the linear low-density polyethylene resin D (Dowlex 2098P manufactured by The Dow Chemical Company, density: 0.926 g/cm³).

In the first sealant layer thus formed, a layer composed of the linear low-density polyethylene resin D had a thickness of 20 µm, a layer composed of the high-density polyethylene resin had a thickness of 60 µm, and a layer composed of the linear low-density polyethylene resin D had a thickness of 20 µm.

The urethane adhesive agent (RU004/H1 manufactured by Rock Paint Co., Ltd.) was applied to the deposited surface of the substrate and was dried to form an adhesive layer with a thickness of 3 µm. The deposited surface was bonded to one of the layers composed of the linear low-density polyethylene resin D of the first sealant layer via the adhesive layer.

A gas barrier layer was formed by the inflation method by five-layer coextrusion of
a linear low-density polyethylene resin E (Dowlex 2045G manufactured by The Dow Chemical Company, density: 0.920 g/cm³),
the adhesive resin (Admer NF557 manufactured by Mitsui Chemicals, Inc., density: 0.903 g/cm³),
an ethylene-vinyl alcohol copolymer (Eval H171B manufactured by Kuraray Co., Ltd., density: 1.17 g/cm³, ethylene content: 38% by mole),
the adhesive resin (Admer NF557 manufactured by Mitsui Chemicals, Inc., density: 0.903 g/cm³), and
the linear low-density polyethylene resin E (Dowlex 2045G manufactured by The Dow Chemical Company, density: 0.920 g/cm³).

The gas barrier layer had a five-layer structure with a total thickness of 60 µm including a layer composed of the linear low-density polyethylene resin E with a thickness of 17.5 µm, a layer composed of the adhesive resin with a thickness of 5 µm, a layer composed of the ethylene-vinyl alcohol copolymer with a thickness of 15 µm, a layer composed of the adhesive resin with a thickness of 5 µm, and a layer composed of the linear low-density polyethylene resin E with a thickness of 17.5 µm.

The low-density polyethylene (Novatec LC600A manufactured by Japan polyethylene Corporation, density: 0.918 g/cm³) was melt-extruded on an undeposited film of the substrate to form a melt-extruded polyethylene layer with a thickness of 20 µm. The undeposited film was bonded to one of the layers composed of the linear low-density polyethylene resin E of the gas barrier layer via the melt-extruded polyethylene layer.

As a second sealant layer, a second sealant layer with a thickness of 100 µm was formed by the inflation method by coextruding
the linear low-density polyethylene resin D (Dowlex 2098P manufactured by The Dow Chemical Company, density: 0.926 g/cm³),
the high-density polyethylene resin (Hi-zex 3300F manufactured by Prime Polymer Co., Ltd., density: 0.950 g/cm³), and
the linear low-density polyethylene resin D (Dowlex 2098P manufactured by The Dow Chemical Company, density: 0.926 g/cm³).

In the second sealant layer thus formed, a layer composed of the linear low-density polyethylene resin D had a thickness of 20 µm, a layer composed of the high-density polyethylene resin had a thickness of 60 µm, and a layer composed of the linear low-density polyethylene resin D had a thickness of 20 µm.

The low-density polyethylene resin (Novatec LC600A manufactured by Japan polyethylene Corporation, density: 0.918 g/cm³) was melt-extruded on the other of the layers composed of the linear low-density polyethylene resin E of the gas barrier layer to form a melt-extruded polyethylene layer with a thickness of 20 µm. The other layer composed of the linear low-density polyethylene resin E was bonded to one of the layers composed of the linear low-density polyethylene resin D of the second sealant layer via the melt-extruded polyethylene layer to prepare a laminate according to the present disclosure. The polyethylene content of the laminate was 90% by mass.

### [Examples E1-2 to E1-5]

Laminates were prepared in the same manner as in Example E1-1 except that the structure of the first polyethylene resin layer was changed as shown in Table 8.

**[Table 8]**

| | | | | | Example | | | | |
|---|---|---|---|---|---|---|---|---|---|
| | | | | Unit | E1-1 | E1-2 | E 1-3 | E 1-4 | E1-5 |
| Substrate layer structure | Before stretching | First polyethylene resin layer | described below (∗) | µm | 10.0 | 10.0 | 10.0 | 10.0 | 10.0 |
| | | Second polyethylene resin layer | Elite5538G | µm | 115.0 | 115.0 | 115.0 | 115.0 | 115.0 |
| | After stretching | First polyethylene resin layer | described below (∗) | µm | 2.0 | 2.0 | 2.0 | 2.0 | 2.0 |
| | | Second polyethylene resin layer | Elite5538G | µm | 23.0 | 23.0 | 23.0 | 23.0 | 23.0 |
| Structure of first polyethylene resin layer (∗) | | Blend ratio | Elite5538G | parts by mass | 100.0 | 80.0 | - | - | - |
| | | | Elite5960G | parts by mass | - | - | 90.0 | 80.0 | 70.0 |
| | | | INFUSE9100 | parts by mass | - | 20.0 | 10.0 | 20.0 | 30.0 |

### [Example E2-1]

The polyethylene resin B was subjected to three-layer coextrusion by the inflation molding method to form a film composed of a first polyethylene resin layer (10 µm), a second polyethylene resin layer (105 µm), and a third polyethylene resin layer (10 µm).

The film was stretched five times in the machine direction (MD) to form a stretched substrate with a thickness of 25 µm. The thickness after the stretching was 2 µm in the first polyethylene resin layer, 21 µm in the second polyethylene resin layer, and 2 µm in the third polyethylene resin layer.

A vapor-deposited substrate was prepared by forming an Al vapor deposition film with a thickness of 30 nm by the PVD method on the first polyethylene resin layer of the stretched substrate thus prepared. The optical density (OD value) of the vapor deposition film thus formed was measured to be 3.0.

As a first sealant layer, a first sealant layer with a thickness of 100 µm was formed by the inflation method by coextruding
the linear low-density polyethylene resin D (Dowlex 2098P manufactured by The Dow Chemical Company, density: 0.926 g/cm³),
the high-density polyethylene resin (Hi-zex 3300F manufactured by Prime Polymer Co., Ltd., density: 0.950 g/cm³), and
the linear low-density polyethylene resin D (Dowlex 2098P manufactured by The Dow Chemical Company, density: 0.926 g/cm³).

In the first sealant layer thus formed, a layer composed of the linear low-density polyethylene resin D had a thickness of 20 µm, a layer composed of the high-density polyethylene resin had a thickness of 60 µm, and a layer composed of the linear low-density polyethylene resin D had a thickness of 20 µm.

The urethane adhesive agent (RU004/H1 manufactured by Rock Paint Co., Ltd.) was applied to the deposited surface of the substrate and was dried to form an adhesive layer with a thickness of 3 µm. The deposited surface was bonded to one of the layers composed of the linear low-density polyethylene resin D of the first sealant layer via the adhesive layer.

A gas barrier layer was formed by the inflation method by five-layer coextrusion of
the linear low-density polyethylene resin E (Dowlex 2045G manufactured by The Dow Chemical Company, density: 0.920 g/cm³),
the adhesive resin (Admer NF557 manufactured by Mitsui Chemicals, Inc., density: 0.903 g/cm³),
the ethylene-vinyl alcohol copolymer (Eval H171B manufactured by Kuraray Co., Ltd., density: 1.17 g/cm³, ethylene content: 38% by mole),
the adhesive resin (Admer NF557 manufactured by Mitsui Chemicals, Inc., density: 0.903 g/cm³), and
the linear low-density polyethylene resin E (Dowlex 2045G manufactured by The Dow Chemical Company, density: 0.920 g/cm³).

The gas barrier layer had a five-layer structure with a total thickness of 60 µm including a layer composed of the linear low-density polyethylene resin E with a thickness of 17.5 µm, a layer composed of the adhesive resin with a thickness of 5 µm, a layer composed of the ethylene-vinyl alcohol copolymer with a thickness of 15 µm, a layer composed of the adhesive resin with a thickness of 5 µm, and a layer composed of the linear low-density polyethylene resin E with a thickness of 17.5 µm.

The low-density polyethylene (Novatec LC600A manufactured by Japan polyethylene Corporation, density: 0.918 g/cm³) was melt-extruded on an undeposited film of the substrate to form a melt-extruded polyethylene layer with a thickness of 20 µm. The undeposited film was bonded to one of the layers composed of the linear low-density polyethylene resin E of the gas barrier layer via the melt-extruded polyethylene layer.

As a second sealant layer, a second sealant layer with a thickness of 100 µm was formed by the inflation method by coextruding
the linear low-density polyethylene resin D (Dowlex 2098P manufactured by The Dow Chemical Company, density: 0.926 g/cm³),
the high-density polyethylene resin (Hi-zex 3300F manufactured by Prime Polymer Co., Ltd., density: 0.950 g/cm³), and
the linear low-density polyethylene resin D (Dowlex 2098P manufactured by The Dow Chemical Company, density: 0.926 g/cm³).

In the second sealant layer thus formed, a layer composed of the linear low-density polyethylene resin D had a thickness of 20 µm, a layer composed of the high-density polyethylene resin had a thickness of 60 µm, and a layer composed of the linear low-density polyethylene resin D had a thickness of 20 µm.

The low-density polyethylene resin (Novatec LC600A manufactured by Japan polyethylene Corporation, density: 0.918 g/cm³) was melt-extruded on the other of the layers composed of the linear low-density polyethylene resin E of the gas barrier layer to form a melt-extruded polyethylene layer with a thickness of 20 µm. The other layer composed of the linear low-density polyethylene resin E was bonded to one of the layers composed of the linear low-density polyethylene resin D of the second sealant layer via the melt-extruded polyethylene layer to prepare a laminate according to the present disclosure. The polyethylene content of the laminate was 90% by mass.

### [Examples E2-2 to E2-5]

Laminates were prepared in the same manner as in Example E2-1 except that the structures of the first and third polyethylene resin layers were changed as shown in Table 9.

**[Table 9]**

| | | | | | Example | | | | |
|---|---|---|---|---|---|---|---|---|---|
| | | | | Unit | E2-1 | E2-2 | E2-3 | E2-4 | E2-5 |
| Substrate layer structure | Before stretching | First polyethylene resin layer | described below (∗) | µm | 10.0 | 10.0 | 10.0 | 10.0 | 10.0 |
| | | Second polyethylene resin layer | Elite5538G | µm | 105.0 | 105.0 | 105.0 | 105.0 | 105.0 |
| | | Third polyethylene resin layer | described below (∗) | µm | 10.0 | 10.0 | 10.0 | 10.0 | 10.0 |
| | After stretching | First polyethylene resin layer | described below (∗) | µm | 2.0 | 2.0 | 2.0 | 2.0 | 2.0 |
| | | Second polyethylene resin layer | Elite5538G | µm | 21.0 | 21.0 | 21.0 | 21.0 | 21.0 |
| | | Third polyethylene resin layer | described below (∗) | µm | 2.0 | 2.0 | 2.0 | 2.0 | 2.0 |
| Structure of first and third polyethylene resin layers (∗) | | Blend ratio | Elite5538G | parts by mass | 100.0 | 80.0 | - | - | - |
| | | | Elite5960G | parts by mass | - | - | 90.0 | 80.0 | 70.0 |
| | | | INFUSE9100 | parts by mass | - | 20.0 | 10.0 | 20.0 | 30.0 |

### [Example E3-1]

The polyethylene resin B was subjected to single layer extrusion by the inflation molding method to form a film composed of a first polyethylene resin layer (125 µm). The film was stretched five times in the machine direction (MD) to form a stretched substrate with a thickness of 25 µm.

A vapor-deposited substrate was prepared by forming an Al vapor deposition film with a thickness of 30 nm by the PVD method on the first polyethylene resin layer of the stretched substrate thus prepared. The optical density (OD value) of the vapor deposition film thus formed was measured to be 3.0.

As a first sealant layer, a first sealant layer with a thickness of 100 µm was formed by the inflation method by coextruding
the linear low-density polyethylene resin D (Dowlex 2098P manufactured by The Dow Chemical Company, density: 0.926 g/cm³),
the high-density polyethylene resin (Hi-zex 3300F manufactured by Prime Polymer Co., Ltd., density: 0.950 g/cm³), and
the linear low-density polyethylene resin D (Dowlex 2098P manufactured by The Dow Chemical Company, density: 0.926 g/cm³).

In the first sealant layer thus formed, a layer composed of the linear low-density polyethylene resin D had a thickness of 20 µm, a layer composed of the high-density polyethylene resin had a thickness of 60 µm, and a layer composed of the linear low-density polyethylene resin D had a thickness of 20 µm.

The urethane adhesive agent (RU004/H1 manufactured by Rock Paint Co., Ltd.) was applied to the deposited surface of the substrate and was dried to form an adhesive layer with a thickness of 3 µm. The deposited surface was bonded to one of the layers composed of the linear low-density polyethylene resin D of the first sealant layer via the adhesive layer.

A gas barrier layer was formed by the inflation method by five-layer coextrusion of
the linear low-density polyethylene resin E (Dowlex 2045G manufactured by The Dow Chemical Company, density: 0.920 g/cm³),
the adhesive resin (Admer NF557 manufactured by Mitsui Chemicals, Inc., density: 0.903 g/cm³),
the ethylene-vinyl alcohol copolymer (Eval H171B manufactured by Kuraray Co., Ltd., density: 1.17 g/cm³, ethylene content: 38% by mole),
the adhesive resin (Admer NF557 manufactured by Mitsui Chemicals, Inc., density: 0.903 g/cm³), and
the linear low-density polyethylene resin E (Dowlex 2045G manufactured by The Dow Chemical Company, density: 0.920 g/cm³).

The gas barrier layer had a five-layer structure with a total thickness of 60 µm including a layer composed of the linear low-density polyethylene resin E with a thickness of 17.5 µm, a layer composed of the adhesive resin with a thickness of 5 µm, a layer composed of the ethylene-vinyl alcohol copolymer with a thickness of 15 µm, a layer composed of the adhesive resin with a thickness of 5 µm, and a layer composed of the linear low-density polyethylene resin E with a thickness of 17.5 µm.

The low-density polyethylene (Novatec LC600A manufactured by Japan polyethylene Corporation, density: 0.918 g/cm³) was melt-extruded on an undeposited film of the substrate to form a melt-extruded polyethylene layer with a thickness of 20 µm. The undeposited film was bonded to one of the layers composed of the linear low-density polyethylene resin E of the gas barrier layer via the melt-extruded polyethylene layer.

As a second sealant layer, a second sealant layer with a thickness of 100 µm was formed by the inflation method by coextruding
the linear low-density polyethylene resin D (Dowlex 2098P manufactured by The Dow Chemical Company, density: 0.926 g/cm³),
the high-density polyethylene resin (Hi-zex 3300F manufactured by Prime Polymer Co., Ltd., density: 0.950 g/cm³), and
the linear low-density polyethylene resin D (Dowlex 2098P manufactured by The Dow Chemical Company, density: 0.926 g/cm³).

In the second sealant layer thus formed, a layer composed of the linear low-density polyethylene resin D had a thickness of 20 µm, a layer composed of the high-density polyethylene resin had a thickness of 60 µm, and a layer composed of the linear low-density polyethylene resin D had a thickness of 20 µm.

The low-density polyethylene resin (Novatec LC600A manufactured by Japan polyethylene Corporation, density: 0.918 g/cm³) was melt-extruded on the other of the layers composed of the linear low-density polyethylene resin E of the gas barrier layer to form a melt-extruded polyethylene layer with a thickness of 20 µm. The other layer composed of the linear low-density polyethylene resin E was bonded to one of the layers composed of the linear low-density polyethylene resin D of the second sealant layer via the melt-extruded polyethylene layer to prepare a laminate according to the present disclosure. The polyethylene content of the laminate was 90% by mass.

### [Examples E3-2 to E3-5]

Laminates were prepared in the same manner as in Example E3-1 except that the structure of the first polyethylene resin layer was changed as shown in Table 10.

**[Table 10]**

| | | | | | Example | | | | |
|---|---|---|---|---|---|---|---|---|---|
| | | | | Unit | E3-1 | E3-2 | E3-3 | E3-4 | E3-5 |
| Substrate layer structure | Before stretching | First polyethylene resin layer | described below (∗) | µm | 125.0 | 125.0 | 125.0 | 125.0 | 125.0 |
| | After stretching | First polyethylene resin layer | described below (∗) | µm) | 25.0 | 25.0 | 25.0 | 25.0 | 25.0 |
| Structure of first polyethylene resin layer (∗) | | Blend ratio | Elite5538G | parts by mass | 100.0 | 80.0 | - | - | - |
| | | | Elite5960G | parts by mass | - | - | 90.0 | 80.0 | 70.0 |
| | | | INFUSE9100 | parts by mass | - | 20.0 | 10.0 | 20.0 | 30.0 |

### [Example E4-1]

A block film was prepared by coextruding the polyethylene resin B by the inflation molding method by five-layer coextrusion to form a five-layer tubular film composed of a first polyethylene resin layer (10 µm), second to fourth polyethylene resin layers (46.5 µm), and a fifth polyethylene resin layer (6 µm), and
then pressure-bonding the inner layers, that is, the fifth polyethylene resin layers with a rubber roller. The block film was composed of the first polyethylene resin layer (10 µm), the second to fourth polyethylene resin layers (46.5 µm), the fifth polyethylene resin layer (12 µm), the second to fourth polyethylene resin layers (46.5 µm), and the first polyethylene resin layer (10 µm).

The block film was stretched in the machine direction (MD) at a stretch ratio of 5 to form a stretched substrate film with a thickness of 25 µm. The thickness after the stretching was 2 µm in the first polyethylene resin layer, 9.3 µm in the second to fourth polyethylene resin layers, 2.4 µm in the fifth polyethylene resin layer, 9.3 µm in the second to fourth polyethylene resin layers, and 2 µm in the first polyethylene resin layer.

A vapor-deposited substrate was prepared by forming an Al vapor deposition film with a thickness of 30 nm by the PVD method on the first polyethylene resin layer of the stretched substrate thus prepared. The optical density (OD value) of the vapor deposition film thus formed was measured to be 3.0.

As a first sealant layer, a first sealant layer with a thickness of 100 µm was formed by the inflation method by coextruding
the linear low-density polyethylene resin D (Dowlex 2098P manufactured by The Dow Chemical Company, density: 0.926 g/cm³),
the high-density polyethylene resin (Hi-zex 3300F manufactured by Prime Polymer Co., Ltd., density: 0.950 g/cm³), and
the linear low-density polyethylene resin D (Dowlex 2098P manufactured by The Dow Chemical Company, density: 0.926 g/cm³).

In the first sealant layer thus formed, a layer composed of the linear low-density polyethylene resin D had a thickness of 20 µm, a layer composed of the high-density polyethylene resin had a thickness of 60 µm, and a layer composed of the linear low-density polyethylene resin D had a thickness of 20 µm.

The urethane adhesive agent (RU004/H1 manufactured by Rock Paint Co., Ltd.) was applied to the deposited surface of the substrate and was dried to form an adhesive layer with a thickness of 3 µm. The deposited surface was bonded to one of the layers composed of the linear low-density polyethylene resin D of the first sealant layer via the adhesive layer.

A gas barrier layer was formed by the inflation method by five-layer coextrusion of
the linear low-density polyethylene resin E (Dowlex 2045G manufactured by The Dow Chemical Company, density: 0.920 g/cm³),
the adhesive resin (Admer NF557 manufactured by Mitsui Chemicals, Inc., density: 0.903 g/cm³),
the ethylene-vinyl alcohol copolymer (Eval H171B manufactured by Kuraray Co., Ltd., density: 1.17 g/cm³, ethylene content: 38% by mole),
the adhesive resin (Admer NF557 manufactured by Mitsui Chemicals, Inc., density: 0.903 g/cm³), and
the linear low-density polyethylene resin E (Dowlex 2045G manufactured by The Dow Chemical Company, density: 0.920 g/cm³).

The gas barrier layer had a five-layer structure with a total thickness of 60 µm including a layer composed of the linear low-density polyethylene resin E with a thickness of 17.5 µm, a layer composed of the adhesive resin with a thickness of 5 µm, a layer composed of the ethylene-vinyl alcohol copolymer with a thickness of 15 µm, a layer composed of the adhesive resin with a thickness of 5 µm, and a layer composed of the linear low-density polyethylene resin E with a thickness of 17.5 µm.

The low-density polyethylene (Novatec LC600A manufactured by Japan polyethylene Corporation, density: 0.918 g/cm³) was melt-extruded on an undeposited film of the substrate to form a melt-extruded polyethylene layer with a thickness of 20 µm. The undeposited film was bonded to one of the layers composed of the linear low-density polyethylene resin E of the gas barrier layer via the melt-extruded polyethylene layer.

As a second sealant layer, a second sealant layer with a thickness of 100 µm was formed by the inflation method by coextruding
the linear low-density polyethylene resin D (The Dow Chemical Company, Dowlex 2098P, density: 0.926 g/cm³),
the high-density polyethylene resin (Hi-zex 3300F manufactured by Prime Polymer Co., Ltd., density: 0.950 g/cm³), and
the linear low-density polyethylene resin D (The Dow Chemical Company, Dowlex 2098P, density: 0.926 g/cm³).

In the second sealant layer thus formed, a layer composed of the linear low-density polyethylene resin D had a thickness of 20 µm, a layer composed of the high-density polyethylene resin had a thickness of 60 µm, and a layer composed of the linear low-density polyethylene resin D had a thickness of 20 µm.

The low-density polyethylene resin (Novatec LC600A manufactured by Japan polyethylene Corporation, density: 0.918 g/cm³) was melt-extruded on the other of the layers composed of the linear low-density polyethylene resin E of the gas barrier layer to form a melt-extruded polyethylene layer with a thickness of 20 µm. The other layer composed of the linear low-density polyethylene resin E was bonded to one of the layers composed of the linear low-density polyethylene resin D of the second sealant layer via the melt-extruded polyethylene layer to prepare a laminate according to the present disclosure. The polyethylene content of the laminate was 90% by mass.

### [Examples E4-2 to E4-5]

Laminates were prepared in the same manner as in Example E4-1 except that the structure of the first polyethylene resin layer was changed as shown in Table 11.

**[Table 11]**

| | | | | | | Example | | | | |
|---|---|---|---|---|---|---|---|---|---|---|
| | | | | | Unit | E4-1 | E4-2 | E4-3 | E4-4 | E4-5 |
| Substrate layer structure | Before stretching | Before joining two layers | First polyethylene resin layer | described below (∗) | µm | 10.0 | 10.0 | 10.0 | 10.0 | 10.0 |
| | | | Second to fourth polyethylene resin layers | Elite5538G | µm | 46.5 | 46.5 | 46.5 | 46.5 | 46.5 |
| | | | Fifth polyethylene resin layer | Affinity PL1880G | µm | 6.0 | 6.0 | 6.0 | 6.0 | 6.0 |
| | | After joining two layers | First polyethylene resin layer | described below (∗) | µm | 10.0 | 10.0 | 10.0 | 10.0 | 10.0 |
| | | | Second to fourth polyethylene resin layers | Elite5538G | µm | 46.5 | 46.5 | 46.5 | 46.5 | 46.5 |
| | | | Fifth polyethylene resin layer | Affinity PL1880G | µm | 12.0 | 12.0 | 12.0 | 12.0 | 12.0 |
| | | | Second to fourth polyethylene resin layers | Elite5538G(∗) | µm | 46.5 | 46.5 | 46.5 | 46.5 | 46.5 |
| | | | First polyethylene resin layer | described below (∗) | µm | 10.0 | 10.0 | 10.0 | 10.0 | 10.0 |
| | After stretching | After joining two layers | First polyethylene resin layer | described below (∗) | µm | 2.0 | 2.0 | 2.0 | 2.0 | 2.0 |
| | | | Second to fourth polyethylene resin layers | Elite5538G | µm | 9.3 | 9.3 | 9.3 | 9.3 | 9.3 |
| | | | Fifth polyethylene resin layer | Affinity PL1880G | µm | 2.4 | 2.4 | 2.4 | 2.4 | 2.4 |
| | | | Second to fourth polyethylene resin layers | Elite5538G | µm | 9.3 | 9.3 | 9.3 | 9.3 | 9.3 |
| | | | First polyethylene resin layer | described below (∗) | µm | 2.0 | 2.0 | 2.0 | 2.0 | 2.0 |
| Structure of first polyethylene resin layer (∗) | | | Blend ratio | Elite5538G | parts by mass | 100.0 | 80.0 | - | - | - |
| | | | | Elite5960G | parts by mass | - | - | 90.0 | 80.0 | 70.0 |
| | | | | INFUSE9100 | parts by mass | - | 20.0 | 10.0 | 20.0 | 30.0 |

### [Example E5-1]

The linear low-density polyethylene (The Dow Chemical Company, Dowlex 2045G, density: 0.920 g/cm³) and the compatibilizer (The Dow Chemical Company, maleic anhydride modified polyethylene, Retain 3000, density: 0.870 g/cm³) were blended at the ratio of linear low-density polyethylene:compatibilizer = 93% by mass:7% by mass to prepare a blend resin.

A gas barrier layer was formed by the inflation method by five-layer coextrusion of
the blend resin thus prepared,
the adhesive resin (Admer NF557 manufactured by Mitsui Chemicals, Inc., density: 0.903 g/cm³),
the ethylene-vinyl alcohol copolymer (Eval H171B manufactured by Kuraray Co., Ltd., density: 1.17 g/cm³, ethylene content: 38% by mole),
the adhesive resin (Admer NF557 manufactured by Mitsui Chemicals, Inc., density: 0.903 g/cm³), and
the blend resin.

The gas barrier layer had a five-layer structure with a total thickness of 60 µm including a layer composed of the blend resin with a thickness of 17.5 µm, a layer composed of the adhesive resin with a thickness of 5 µm, a layer composed of the ethylene-vinyl alcohol copolymer with a thickness of 15 µm, a layer composed of the adhesive resin with a thickness of 5 µm, and a layer composed of the blend resin with a thickness of 17.5 µm.

A laminate according to the present disclosure was prepared in the same manner as in Example E1-1 except that the gas barrier layer was replaced with the gas barrier layer prepared as described above. The polyethylene content of the laminate was 90% by mass.

### [Example E5-2]

A laminate according to the present disclosure was prepared in the same manner as in Example E1-2 except that the gas barrier layer was replaced with the gas barrier layer prepared in Example E5-1. The polyethylene content of the laminate was 90% by mass.

### [Example E5-3]

A laminate according to the present disclosure was prepared in the same manner as in Example E1-3 except that the gas barrier layer was replaced with the gas barrier layer prepared in Example E5-1. The polyethylene content of the laminate was 90% by mass.

### [Example E5-4]

A laminate according to the present disclosure was prepared in the same manner as in Example E1-4 except that the gas barrier layer was replaced with the gas barrier layer prepared in Example E5-1. The polyethylene content of the laminate was 90% by mass.

### [Example E5-5]

A laminate according to the present disclosure was prepared in the same manner as in Example E1-5 except that the gas barrier layer was replaced with the gas barrier layer prepared in Example E5-1. The polyethylene content of the laminate was 90% by mass.

### [Example E6-1]

A laminate according to the present disclosure was prepared in the same manner as in Example E2-1 except that the gas barrier layer was replaced with the gas barrier layer prepared in Example E5-1. The polyethylene content of the laminate was 90% by mass.

### [Example E6-2]

A laminate according to the present disclosure was prepared in the same manner as in Example E2-2 except that the gas barrier layer was replaced with the gas barrier layer prepared in Example E5-1. The polyethylene content of the laminate was 90% by mass.

### [Example E6-3]

A laminate according to the present disclosure was prepared in the same manner as in Example E2-3 except that the gas barrier layer was replaced with the gas barrier layer prepared in Example E5-1. The polyethylene content of the laminate was 90% by mass.

### [Example E6-4]

A laminate according to the present disclosure was prepared in the same manner as in Example E2-4 except that the gas barrier layer was replaced with the gas barrier layer prepared in Example E5-1. The polyethylene content of the laminate was 90% by mass.

### [Example E6-5]

A laminate according to the present disclosure was prepared in the same manner as in Example E2-5 except that the gas barrier layer was replaced with the gas barrier layer prepared in Example E5-1. The polyethylene content of the laminate was 90% by mass.

### [Example E7-1]

A laminate according to the present disclosure was prepared in the same manner as in Example E3-1 except that the gas barrier layer was replaced with the gas barrier layer prepared in Example E5-1. The polyethylene content of the laminate was 90% by mass.

### [Example E7-2]

A laminate according to the present disclosure was prepared in the same manner as in Example E3-2 except that the gas barrier layer was replaced with the gas barrier layer prepared in Example E5-1. The polyethylene content of the laminate was 90% by mass.

### [Example E7-3]

A laminate according to the present disclosure was prepared in the same manner as in Example E3-3 except that the gas barrier layer was replaced with the gas barrier layer prepared in Example E5-1. The polyethylene content of the laminate was 90% by mass.

### [Example E7-4]

A laminate according to the present disclosure was prepared in the same manner as in Example E3-4 except that the gas barrier layer was replaced with the gas barrier layer prepared in Example E5-1. The polyethylene content of the laminate was 90% by mass.

### [Example E7-5]

A laminate according to the present disclosure was prepared in the same manner as in Example E3-5 except that the gas barrier layer was replaced with the gas barrier layer prepared in Example E5-1. The polyethylene content of the laminate was 90% by mass.

### [Example E8-1]

A laminate according to the present disclosure was prepared in the same manner as in Example E4-1 except that the gas barrier layer was replaced with the gas barrier layer prepared in Example E5-1. The polyethylene content of the laminate was 90% by mass.

### [Example E8-2]

A laminate according to the present disclosure was prepared in the same manner as in Example E4-2 except that the gas barrier layer was replaced with the gas barrier layer prepared in Example E5-1. The polyethylene content of the laminate was 90% by mass.

### [Example E8-3]

A laminate according to the present disclosure was prepared in the same manner as in Example E4-3 except that the gas barrier layer was replaced with the gas barrier layer prepared in Example E5-1. The polyethylene content of the laminate was 90% by mass.

### [Example E8-4]

A laminate according to the present disclosure was prepared in the same manner as in Example E4-4 except that the gas barrier layer was replaced with the gas barrier layer prepared in Example E5-1. The polyethylene content of the laminate was 90% by mass.

### [Example E8-5]

A laminate according to the present disclosure was prepared in the same manner as in Example E4-5 except that the gas barrier layer was replaced with the gas barrier layer prepared in Example E5-1. The polyethylene content of the laminate was 90% by mass.

### [Comparative Example E1]

A laminate was prepared in the same manner as in Example E1-1 except that the substrate was replaced with the biaxially stretched poly(ethylene terephthalate) (manufactured by Toyobo Co., Ltd., ester film E5100) with a thickness of 12 µm. The polyethylene content of the laminate was 85% by mass.

### (Preparation of Tube Container)

The laminates thus prepared were processed into a slit with a width of 120 mm using a bobbin cutter. Both ends in the width direction were superposed with each other at an overlap width of approximately 1.5 mm and were then thermally fused to prepare a cylindrically bonded raw laminate. The raw laminate was cut to a length of 122 mm in the length direction to prepare a cylindrical trunk, which serves as a trunk of a tube container.

A tube container as illustrated in Fig. 8 was prepared by mounting the cylindrical trunk on a mandrel for forming a tube container, and injecting a high-density polyethylene resin (manufactured by Japan polyethylene Corporation, Novatec HJ360, density: 0.951 g/cm³) by injection molding to form a head composed of a truncated cone shaped shoulder and a cylindrical outlet continuous with the shoulder at one end of the cylindrical trunk.

The outlet of the head of the resulting tube container body had an outer diameter of 13 mm and a height of 1.5 mm and had a thread on the side surface of the outlet. The shoulder had an outer diameter of 38 mm.

The high-density polyethylene was then injected into a mold for forming a cap to form a cap. Thus, a tube container according to the present disclosure was prepared.

### <<Evaluation of Recyclability> >

The recyclability of each laminate prepared in the examples and comparative examples was evaluated on the basis of the following evaluation criteria. Table 12 summarizes the evaluation results.

### (Evaluation Criteria)

O: The same polyolefin content of the laminate was 90% or more by mass.
X: The same polyolefin content of the laminate was less than 90% by mass.

### < <Shoulder Adhesive Strength>>

A test specimen was cut out in a band shape with a width of 15 mm toward the bottom from the joint between the trunk and the shoulder.

The test specimen was pulled with a tensile tester (RTC-1310A manufactured by Orientec Co., Ltd.) at a test speed of 300 mm/min to measure peel strength when the trunk was separated from the shoulder. Table 12 summarizes the measurement results.

### < <Side Seam Strength>>

A test specimen was cut out in a band shape with a width of 15 mm in the direction perpendicular to the side seam (overlap) of the trunk and was pulled with the tensile tester at a test speed of 300 mm/min to measure breaking strength. Table 12 summarizes the measurement results.

### <<Evaluation of Leakage>>

A cap was screwed on the outlet of the tube container body. The tube container body was then filled with 120 g of a commercial toothpaste as the contents through the opening of the cylindrical trunk. The opening of the cylindrical trunk was then heat-sealed. The cap was closed at a torque of 4.7 kg.cm. While left at room temperature for two weeks, the contents were visually checked for leakage every day. The leakage was evaluated on the basis of the following criteria.

### (Evaluation Criterion)

O: No leakage of the contents was observed even after the two weeks.
X: Leakage of the contents was observed within the two weeks.

**[Table 12]**

| | Evaluation of recyclability | Shoulder adhesive strength [N/15mm] | Side seam strength [N/15mm] | Evaluation of leakage |
|---|---|---|---|---|
| Example E1-1 | ○ | 89 | 88 | ○ |
| Example E1-2 | ○ | 85 | 84 | ○ |
| Example E1-3 | ○ | 87 | 86 | ○ |
| Example E1-4 | ○ | 86 | 87 | ○ |
| Example E1-5 | ○ | 86 | 87 | ○ |
| Example E2-1 | ○ | 89 | 88 | ○ |
| Example E2-2 | ○ | 85 | 84 | ○ |
| Example E2-3 | ○ | 87 | 86 | ○ |
| Example E2-4 | ○ | 86 | 87 | ○ |
| Example E2-5 | ○ | 86 | 87 | ○ |
| Example E3-1 | ○ | 89 | 88 | ○ |
| Example E3-2 | ○ | 85 | 84 | ○ |
| Example E3-3 | ○ | 87 | 86 | ○ |
| Example E3-4 | ○ | 86 | 87 | ○ |
| Example E3-5 | ○ | 86 | 87 | ○ |
| Example E4-1 | ○ | 89 | 88 | ○ |
| Example E4-2 | ○ | 85 | 84 | ○ |
| Example E4-3 | ○ | 87 | 86 | ○ |
| Example E4-4 | ○ | 86 | 87 | ○ |
| Example E4-5 | ○ | 86 | 87 | ○ |
| Example E5-1 | ○ | 89 | 88 | ○ |
| Example E5-2 | ○ | 85 | 84 | ○ |
| Example E5-3 | ○ | 87 | 86 | ○ |
| Example E5-4 | ○ | 86 | 87 | ○ |
| Example E5-5 | ○ | 86 | 87 | ○ |
| Example E6-1 | ○ | 89 | 88 | ○ |
| Example E6-2 | ○ | 85 | 84 | ○ |
| Example E6-3 | ○ | 87 | 86 | ○ |
| Example E6-4 | ○ | 86 | 87 | ○ |
| Example E6-5 | ○ | 86 | 87 | ○ |
| Example E7-1 | ○ | 89 | 88 | ○ |
| Example E7-2 | ○ | 85 | 84 | ○ |
| Example E7-3 | ○ | 87 | 86 | ○ |
| Example E7-4 | ○ | 86 | 87 | ○ |
| Example E7-5 | ○ | 86 | 87 | ○ |
| Example E8-1 | ○ | 89 | 88 | ○ |
| Example E8-2 | ○ | 85 | 84 | ○ |
| Example E8-3 | ○ | 87 | 86 | ○ |
| Example E8-4 | ○ | 86 | 87 | ○ |
| Example E8-5 | ○ | 86 | 87 | ○ |
| Comparative example E1 | × | 88 | 87 | ○ |

### Reference Signs List

- 10, 20, 30, 40: laminate
- 11, 21, 34, 41: first sealant layer
- 12, 22, 33, 42: vapor deposition film
- 13, 35, 45: second sealant layer
- 14, 26: polyethylene resin layer
- 15, 25: surface resin layer
- 23, 31, 43: substrate
- 24: sealant layer
- 18, 48: layer containing gas barrier resin
- 19, 27, 47, 49: adhesive resin layer
- 44: gas barrier layer
- 46: first polyolefin resin layer
- 50: second polyolefin resin layer
- 100: laminated tube
- 110: laminated tube body
- 111: head
- 112: trunk
- 113: shoulder
- 114: outlet
- 115: thread
- 116: weld
- 117: bottom seal
- 120: cap

## Claims

1. A laminate comprising at least a first sealant layer, a vapor deposition film, and a second sealant layer in this order,
wherein the first sealant layer includes at least a polyethylene resin layer and a surface resin layer,
the vapor deposition film is located on the surface resin layer of the first sealant layer,
the second sealant layer comprises a polyethylene resin, and
the surface resin layer of the first sealant layer contains a resin material with a melting point of 150°C or more.

2. A laminate comprising at least a first sealant layer, a vapor deposition film, a substrate, and a second sealant layer in this order,
wherein the substrate includes at least a polyethylene resin layer and a surface resin layer,
the vapor deposition film is located on the surface resin layer of the substrate,
the first sealant layer and the second sealant layer comprise a polyethylene resin, and
the surface resin layer of the substrate contains a resin material with a melting point of 150°C or more.

3. The laminate according to Claim 1 or 2, wherein the surface resin layer contains a resin material with a melting point of 150°C or more and 265°C or less.

4. The laminate according to any one of Claims 1 to 3, wherein the polyethylene resin and the resin material with a melting point of 150°C or more in the surface resin layer have a melting point difference in the range of 20°C to 80°C.

5. The laminate according to any one of Claims 1 to 4, wherein the resin material of the surface resin layer comprises a polymer with a polar group.

6. The laminate according to any one of Claims 1 to 5, wherein the resin material of the surface resin layer is at least one resin material selected from ethylene-vinyl alcohol copolymers, poly(vinyl alcohol), polyesters, nylon 6, nylon 6,6, nylon 6-nylon 6,6 copolymers, MXD nylon, and amorphous nylon.

7. The laminate according to any one of Claims 1 to 6, wherein the polyethylene resin layer has a multilayer structure.

8. The laminate according to any one of Claims 1 to 7, wherein the polyethylene resin layer includes at least one layer containing a compatibilizer.

9. The laminate according to any one of Claims 1 to 8, wherein the substrate or the first sealant layer is a coextruded film.

10. The laminate according to any one of Claims 1 to 9, further comprising a barrier coating layer on a side of the vapor deposition layer opposite a side in contact with the surface resin layer.

11. The laminate according to any one of Claims 1 to 10, wherein the substrate is subjected to stretching.

12. A laminate comprising at least a first sealant layer, a vapor deposition layer, and a substrate in this order,
wherein the substrate includes a polyethylene resin layer comprising a polyethylene resin and an olefin elastomer resin,
the substrate is subjected to stretching,
the vapor deposition film is located on the polyethylene resin layer, and
the first sealant layer comprises a polyethylene resin.

13. The laminate according to Claim 12, wherein the olefin elastomer resin is at least one selected from the group consisting of ethylene elastomer resins and olefin block copolymers.

14. The laminate according to Claim 13, wherein the olefin block copolymers are ethylene/α-olefin interpolymers.

15. The laminate according to Claim 14, wherein the ethylene/α-olefin interpolymers include a hard block comprising a polyethylene and a soft block comprising an α-olefin monomer.

16. The laminate according to any one of Claims 12 to 15, wherein the polyethylene resin layer has an olefin elastomer resin content of 1% or more by mass and 40% or less by mass.

17. The laminate according to any one of Claims 12 to 16, wherein the polyethylene resin in the polyethylene resin layer has a density of 0.970 g/cm³ or less.

18. The laminate according to any one of Claims 12 to 17, wherein the substrate has a multilayer structure, and each layer constituting the multilayer structure comprises a polyolefin resin.

19. The laminate according to Claim 18, wherein polyethylene resins constituting adjacent layers have different densities and have a density gradient.

20. The laminate according to Claim 19, wherein the polyethylene resins of the adjacent layers have a density difference of 0.05 g/cm³ or less.

21. The laminate according to any one of Claims 12 to 20, further comprising a second sealant layer on a side of the substrate opposite a side on which the first sealant layer is located,
wherein the second sealant layer comprises a polyethylene resin.

22. The laminate according to any one of Claims 12 to 21, further comprising a barrier coating layer between the first sealant layer and the vapor deposition layer.

23. The laminate according to Claim 21 or 22, further comprising a gas barrier layer between the substrate and the second sealant layer.

24. A laminate comprising at least a first sealant layer, a vapor deposition film, a substrate, a gas barrier layer, and a second sealant layer in this order,
wherein the substrate includes at least a first polyethylene resin layer comprising a polyethylene resin with a density of 0.943 g/cm³ or less,
the substrate is subjected to stretching,
the vapor deposition film is located on the first polyethylene resin layer of the substrate, and
the first sealant layer and the second sealant layer comprise a polyethylene resin.

25. The laminate according to Claim 24, wherein the gas barrier layer has a five-layer structure composed of a first polyolefin resin layer, an adhesive resin layer, a layer containing a gas barrier resin, an adhesive resin layer, and a second polyolefin resin layer.

26. The laminate according to Claim 24 or 25, wherein the first polyolefin resin layer and the second polyolefin resin layer of the gas barrier layer comprise a polyethylene resin and a compatibilizer.

27. The laminate according to any one of Claims 1 to 26, wherein the laminate is used for a packaging container.

28. The laminate according to any one of Claims 1 to 27, wherein the laminate has a total polyethylene resin content of 90% or more by mass.

29. A packaging container comprising the laminate according to any one of Claims 1 to 28.

30. The packaging container according to Claim 29, wherein the packaging container is a laminated tube.
